# EUROPÄISCHE PATENTSCHRIFT

(11) **EP 2 313 265 B1**
(45) Veröffentlichungstag und Bekanntmachung des Hinweises auf die Patenterteilung: **04.05.2016**
(21) Anmeldenummer: 09781308.3
(22) Anmeldetag: 30.07.2009
(51) Int. Cl.: B32B 15/02

(54) **MEHRSCHICHTIGE KÖRPER, IHRE HERSTELLUNG UND VERWENDUNG**
MULTILAYERED ELEMENTS, THE PRODUCTION THEREOF AND THE USE THEREOF
CORPS MULTICOUCHE, LEUR FABRICATION ET LEUR UTILISATION

(30) Priorität: 13.08.2008 EP 08162314
(43) Veröffentlichungstag der Anmeldung: 27.04.2011
(73) Patentinhaber: BASF SE, 67056 Ludwigshafen am Rhein (DE)
(72) Erfinder: KRÜSEMANN, Juliane, 67069 Ludwigshafen (DE); STEINIG-NOWAKOWSKI, Christian, 67146 Deidesheim (DE); LUNKWITZ, Ralph, 67434 Neustadt (DE); KACZUN, Jürgen, 67157 Wachenheim (DE); PFUNDSTEIN, Margit, 67366 Weingarten (DE)
(74) Vertreter: Ricker, Mathias
(86) Internationale Anmeldenummer: PCT/EP2009/059897
(87) Internationale Veröffentlichungsnummer: WO 2010/018076

(56) Entgegenhaltungen:
- US-A- 4 670 321

## Beschreibung

Die vorliegende Erfindung betrifft mehrschichtige Körper, umfassend
(A) mindestens eine Dekorschicht,
(B) mindestens ein Substrat, das Cellulosefasern enthält,
(C) mindestens eine metallhaltige Schicht, hergestellt durch ein Verfahren, das die folgenden Schritte umfasst
   (a) Bedrucken von Dekorschicht (A) oder eines Teils von Dekorschicht (A) mit einer Druckformulierung, die mindestens ein Metallpulver enthält,
   (b) Abscheiden mindestens eines weiteren Metalls,
(D) gegebenenfalls mindestens eine Abdeckschicht.

Weiterhin betrifft die vorliegende Erfindung ein Verfahren zur Herstellung von mehrschichtigen Körpern und die Verwendung von erfindungsgemäßen mehrschichtigen Körpern.

Substrate, die Cellulosefasern enthalten, werden für viele Anwendungen im Gebäude-Innenbereich und in Automobilen eingesetzt. Beispiele für den Gebäude-Innenbereich sind Paneele, Fußböden, Wandverkleidungen und Decken. Beispiele für den Automobilbereich sind Armaturenbretter und Konsolen. Gerne kombiniert man derartige zellulosehaltige Substrate mit elektrischen Leitungen.

Besonders geeignete Substrate, die Cellulosefasern enthalten., sind MDF- und HDF, insbesondere durchgefärbte MDF und durchgefärbte HDF, wie sie in WO 2008/055535 offenbart sind.

Insbesondere hinter den genannten Substraten werden in vielen Fällen auch Leitungen, beispielsweise Stromleitungen in Form von Drähten, angebracht, um derartige Leitungen für das Auge unsichtbar und gegen mechanische Zerstörung geschützt anzubringen.

Man stellt jedoch fest, dass derartige Leitungen sehr empfindlich sind gegen elektrostatische Aufladungen. Man stellt außerdem fest, dass derartige Systeme schwierig zu verlegen sind und nur von Fachbetrieben installiert werden können. Gerade aber für Heimwerkermärkte sind derartige Produkte ungeeignet.

US 4,670,321 A offenbart ein Verfahren zur Herstellung eines mehrschichtigen Körpers enthaltend eine Dekorschicht, ein Substrat und eine pigmenthaltige Schicht.

Es wurde vorgeschlagen, elektrische Leitungen zusammen mit Artikeln, die elektrischen Strom verbrauchen, auf eine Dämmmatte zu drucken und diese Dammmatten Es bestand also die Aufgabe, ein flexibles System bereit zu stellen, durch das beispielsweise im Gebäudeinneren oder in Automobilen Strom verbrauchende oder Strom erzeugende Artikel installiert und dennoch gut kaschiert werden können.

Dementsprechend wurden die eingangs definierten mehrschichtigen Körper gefunden, die im Rahmen der vorliegenden Erfindung auch als erfindungsgemäße Körper bezeichnet werden.

In einer Ausführungsform der vorliegenden Erfindung umfassen erfindungsgemäße Körper mindestens eine Dekorschicht (A). Dekorschicht (A) kann sich aus einer oder mehreren Einzelschichten zusammensetzen.

Dekorschicht (A) kann ein- oder mehrteilig sein. In einer Ausführungsform der vorliegenden Erfindung handelt es sich bei Dekorschicht (A) um einen Schichtstoff (Overlay-Papier). In einer anderen Ausführungsform der vorliegenden Erfindung handelt es sich bei Dekorschicht (A) um ein Dekorpapier. In einer anderen Ausführungsform der vorliegenden Erfindung handelt es sich bei Dekorschicht (A) um eine Wachs-, Öl- oder Lackschicht.

Unter Schichtstoffen oder Overlay-Papieren werden im Rahmen der vorliegenden Erfindung aus mehreren Lagen zusammengesetzte und durch Druck miteinander verpresste Harz-getränkte Papierschichten verstanden, wobei die oberste Papierschicht vorzugsweise mit einem Motiv wie beispielsweise Holz, Metallic oder Marmor versehen sein kann. Die oberste Papierschicht kann durch ein transparentes Overlay vor mechanischer Einwirkung geschützt sein, beispielsweise durch eine transparente Kunststofffolie. Als Harze sind beispielsweise Phenolharze, Phenol-Formaldehyd-Harze und Melaminharze zu nennen, weiterhin Melamin-Formaldehyd-Harze und Harnstoff-Melamin-Formaldehyd-Harze.

In einer Ausführungsform der vorliegenden Erfindung sind Schichtstoffe transparent.

Bei Dekorpapier kann es sich beispielsweise um dekorativ gestaltetes Papier handeln. Vorzugsweise handelt es sich bei Dekorpapier um bedrucktes Papier, überwiegend mit Holzstrukturnachahmungen wie zum Beispiel Buche oder Ahorn versehen, oder auch unifarben bedruckte Beschichtungswerkstoffe. Das bedruckte Papier wird mit Melaminharz getränkt und zusammen mit einem harzgetränktem Overlay und ebenfalls harzgetränktem Gegenzugpapier unter Hitze und Druck auf dem Kern verpresst. Bei der Direktbeschichtung werden die vier Lagen - Gegenzug, Kern, Dekorpapier und Overlay - in einem Schritt verpresst.

In einer Ausführungsform der vorliegenden Erfindung handelt es sich bei Dekorschicht (A) um Textil. Wenn man als Dekorschicht (A) Textil wählt, so ist es bevorzugt, es mit einem Harz, das wie unten stehend definiert sein kann, zu tränken und auszuhärten. Der Begriff Textil ist weiter unten definiert und umfasst auch Non-wovens (Vliesstoffe).

Bei Substraten, die Cellulosefasern enthalten und die im Rahmen der vorliegenden Erfindung auch als Substrate (B) bezeichnet werden, kann es sich um beliebige Substrate handeln, die Cellulosefasern enthalten, wobei Lignocellulose unter dem Begriff Cellulose mit subsumiert ist. Beispiel sind Papier und Pappe. Vorzugsweise handelt es sich jedoch bei Cellulosefasern enthaltenden Substraten um manuell nicht zerstörungsfrei biegbare Substrate. Beispielhaft seien Holzwerkstoffe genannt wie beispielsweise Holz, Verbundwerkstoffe von Holz und Thermoplasten, so genannte "wood plastic composites" (WPC), und insbesondere Holzspanwerkstoffe wie Spanplatten, Flachpressplatten, Faserplatten wie beispielsweise Grobspanplatten (OSB-Platten, oriented strand boards), MDF (Mitteldichte Faserplatten) und HDF (Hochdichte Faserplatten).

Bei Verbundwerkstoffen bzw. WPC kann es sich beispielsweise, um gemeinsam extrudierte Verbundwerkstoffe handeln, die man herstellt aus Cellulosefasern oder lignocellulosehaltige Fasern. Beispiele sind Fasern von Flachs, Sisal, Hanf, Kokos, von Abaca (so genanntem Manilahanf), aber auch Reisspelzen, Bambus, Stroh und Erdnussschalen. Bevorzugte Beispiele für Cellulosefasern sind Holzfasern. Dabei kann es sich bei Holzfasern um Fasern von frisch gewonnenem Holz handeln oder von Altholz. Weiterhin kann es sich bei Holzfasern um Fasern unterschiedlicher Holzarten wie Weichhölzer von z.B. Fichten, Kiefern, Tannen oder Lärchen und Harthölzer von z.B. Buchen und Eichen handeln. Auch Holzabfälle wie beispielsweise Hobelspäne, Sägespäne oder Sägemehl sind geeignet. Die Holzzusammensetzung kann in ihren Bestandteilen wie Cellulose, Hemicellulose und Lignin variieren.

WPC enthalten weiterhin mindestens einen Thermoplast. Thermoplaste werden gewählt aus beliebigen thermoplastisch verformbaren Polymeren, die neu oder Recyclat aus alten thermoplastischen Polymeren sein können. Bevorzugt wählt man Thermoplast aus Polyolefinen, bevorzugt Polyethylen, insbesondere HDPE, Polypropylen, insbesondere isotaktisches Polypropylen, und Polyvinylchlorid (PVC), insbesondere Hart-PVC, weiterhin Polyvinylacetat oder Mischungen von Polyethylen und Polypropylen.

Dabei schließen Polyethylen und Polypropylen jeweils auch Copolymere des Ethylens bzw. Propylens mit einem oder mehreren α-Olefin oder Styrol mit ein. So werden im Rahmen der vorliegenden Erfindung unter Polyethylen auch Copolymere mit umfasst, die neben Ethylen als Hauptmonomer (mindestens 50 Gew.-%) ein oder mehrere Comonomere einpolymerisiert enthalten, gewählt aus Styrol oder α-Olefine wie beispielsweise Propylen, 1-Buten, 1-Hexen, 4-Methyl-1-Penten, 1-Octen, 1-Decen, 1-Dodecen, n-α-C₂₂H₄₄, n-α-C₂₄H₄₈ und n-α-C₂₀H₄₀. Im Rahmen der vorliegenden Erfindung werden unter Polypropylen auch Copolymere mit umfasst, die neben Propylen als Hauptmonomer (mindestens 50 Gew.-%) ein oder mehrere Comonomere einpolymerisiert enthalten, gewählt aus Styrol, Ethylen, 1-Buten, 1-Hexen, 4-Methyl-1-Penten, 1-Octen, 1-Decen, 1-Dodecen, n-α-C₂₂H₄₄, n-α-C₂₄H₄₈ und n-α-C₂₀H₄₀.

WPC können weitere Komponenten enthalten, beispielsweise ein oder mehrere Wachse, insbesondere Ethylencopolymerwachse, weiterhin Stabilisatoren und ein oder mehrere Farbmittel, beispielsweise Pigmente.

In einer Ausführungsform der vorliegenden Erfindung wird Substrat (B) gewählt aus MDF und HDF.

Bei HDF (Hochdichte Faserplatten) oder MDF (Mitteldichte Faserplatten) handelt es sich um Holzwerkstoffe, die durch Verpressen bei erhöhten Temperaturen von mit Bindemitteln gemischten Holzfasern hergestellt werden. HDF werden im Rahmen der vorliegenden Erfindung auch als HDF-Platten, MDF auch als MDF-Platten bezeichnet.

In einer Ausführungsform der vorliegenden Erfindung wird MDF mit einer Dichte von 600 bis 850 kg/m³ oder HDF mit einer Dichte von 800 bis 1100 kg/m³ verwendet. Bevorzugt wird gemäß dieser Erfindung HDF mit einer Dichte von 800 bis 1100 kg/m³ als Substrat (B) verwendet.

Holzfasern können aus verschiedenen, dem Fachmann bekannten Rohstoffen hergestellt werden, beispielsweise aus Hackschnitzeln aus rindenfreiem Nadelholz, aber auch aus rindenfreien Laubhölzern wie beispielsweise Buchenholz, weiterhin aus Schwarten (Schwartenholz), Restrollen der Schälfurnierherstellung, Resten aus der Furnierherstellung, Sägespänen oder Altholz, beispielsweise Bruchpaletten. Holzfasern können auch aus mehreren der vorstehend genannten Rohstoffen herstellt werden. Nach verschiedenen Aufschluss- und Zerkleinerungsschritten kann man die aufgeschlossenen Rohstoffe in einem so genannten Zerfaserer (Refiner) fein mahlen. Die dabei erhaltenen Holzfasern werden in zumeist direkt mit Rauchgasen oder Brennern beheizten Stromtrocknern (blow line) getrocknet. Zur Herstellung der Faserplatten werden die so erhaltenen Holzfasern mit einem öder mehreren Bindemittel(n) gemischt, was auch als Beleimung bezeichnet wird. Diese Beleimung kann in Mischern, beispielsweise in einem Trommelmischer, oder in Trocknern, beispielsweise in einem Stromtrockner stattfinden. Die beleimten Holzfasern durchlaufen anschließend einen Trockner, in dem sie auf Restfeuchten von 7 bis 13 % getrocknet werden. Holzfasern können auch nach ihrer Trocknung im Stromtrockner in speziellen Mischern beleimt werden. Auch Kombinationen von Stromtrockner und Mischer sind möglich.

Holzfasern können vor oder während der Herstellung von Faserplatten gebleicht werden.

Bei der chemischen Bleiche von Holzfasern werden die färbenden Begleitstoffe des Holzes durch oxidierende oder/und reduzierende Chemikalien zerstört oder unwirksam gemacht. Für die oxidative Bleiche eignen sich z.B. Wasserstoffperoxid, Ozon, Sauerstoff, Salze von Halogensauerstoffsäuren wie Chlorite und Salze organischer und anorganischer Persäuren, wie Peracetate, Percarbonate und Perborate, vor allem deren Alkalimetallsalze, insbesondere Natriumsalze, wobei die Percarbonate und Wasserstoffperoxid bevorzugt sind. Für die reduktive Bleiche sind z.B. reduzierende Schwefelverbindungen, wie Dithionite, Disulfite, Sulfite bzw. Schwefeldioxid, Sulfinsäuren und deren Salze, insbesondere die Alkalimetallsalze und vor allem die Natriumsalze, und Hydroxycarbonsäuren, wie Zitronerisäure und Äpfelsäure, geeignet. Bevorzugte Reduktionsmittel sind die Disulfite und Sulfite, insbesondere Natriumhydrogensulfit, sowie Apfel- und Zitronensäure.

Vorzugsweise geht man beim Bleichen so vor, dass man wässrige, 5 bis 40 Gew.-% Holzfaserdispersionen kontinuierlich in Gegenstromtürmen bei Temperaturen von 90 bis 150°C und Drücken bis zu 3 bar mit wässrigen Lösungen oder Dispersionen der Bleichmittel behandelt. Üblichweise wird in Gegenwart von Komplexbildnern, wie ED-TA, gearbeitet, um den Abbau der Bleichmittel durch Übergangsmetallionen zu vermeiden.

In einer Ausführungsform der vorliegenden Erfindung werden zur Herstellung der Faserplatten Holzfasern, die zunächst oxidativ und dann reduktiv gebleicht worden sind, verwendet.

Ganz besonders-bevorzugt wird die oxidative Bleiche dabei mit Percarbonaten oder Wasserstoffperoxid und die reduktive Bleiche mit Sulfiten oder Äpfel- oder Zitronensäure durchgeführt.

Vorteilhaft wird die Bleichung der Holzfasern während der Faserplattenherstellung vorgenommen. Bleichmittel können dazu während der Aufschluss- und Zerkleinerungsschritte im Vorerwärmer oder im Kocher zu den Hackschnitzeln gegeben werden. Vorzugsweise werden auch Komplexbildner zugesetzt.

Zur Fertigstellung der Faserplatten werden die beleimten Späne beziehungsweise Holzfasern dann zu Matten geschüttet, gewünschtenfalls kalt vorverdichtet und in beheizten Pressen bei Temperaturen von 170 bis 240 °C zu Faserplatten verpresst.

Als Bindemittel können Aminoplaste wie Harnstoff-Formaldehyd-Harze, Melamin-Formaldehyd-Harze und Harnstoff-Melamin-Formaldehyd-Harze oder mit Phenol verstärkte Harnstoff-Formaldehyd-Harze oder mit Phenol verstärkte Harnstoff-Melamin-Formaldehyd-Harze, aber auch Isocyanate, beispielsweise Diphenylmethan-4,4'-diisocyanat (MDI) in vorzugsweise polymerer Form eingesetzt, kurz auch als PMDI bezeichnet, werden.

Als Substrat (B) verwendeten MDF und HDF können nach der eigentlichen Herstellung nach an sich bekannte Verfahren wie beispielsweise Schleifen behandelt werden.

In einer Ausführungsform der vorliegenden Erfindung handelt es sich bei Substrat (B) um partiell gefärbte oder vorzugsweise durchgefärbte Cellulosefaser-haltige Substrate.

Gemäß einer bevorzugten Ausführungsform der Erfindung sind als Substrat (B) verwendete HDF oder MDF gefärbt, besonders bevorzugt sind als Substrat (B) verwendete HDF oder MDF durchgefärbt. Bevorzugt geschieht die Färbung durch Zugabe von mindestens einer farbgebenden Komponente bei der Herstellung der Faserplatten. Die mindestens eine farbgebende Komponente liegt in der Holzfaserplatte bevorzugt in einer Konzentration von 0,001 bis 20 Gew.-%, bezogen auf atro Faser (absolutes Trockengewicht der Faser), besonders bevorzugt 0,01 bis 10 Gew.-% vor, jeweils bezogen auf atro Faser. Als farbgebende Komponenten können alle zur Färbung von Holzfaserstoffen geeigneten, dem Fachmann bekannten Farbstoffe, Pigmente, Pigmentpräparationen, Farbmittelzubereitungen und Mischungen davon eingesetzt werden.

Farbgebende Komponenten können bei der Faserplattenproduktion entweder dem Bindemittel zugegeben oder getrennt von diesem vor oder nach der Beleimung auf die Holzfasern aufgebracht werden oder mit den Holzfasern vermischt werden.

Gemäß einer bevorzugten Ausführungsform der Erfindung enthält als Substrat (B) verwendete HDF oder MDF als farbgebende Komponente mindestens ein Pigment und, bezogen auf Pigment, 0,1 bis 10 Gew.-% mindestens eines Farbstoffs.

Es können organische und anorganische Pigmente sowie Mischungen aus organischen und anorganischen Pigmenten verwendet werden.

Pigmente liegen bevorzugt in feinteiliger Form vor. In einer Ausführungsform der vorliegenden Erfindung haben Pigmente mittlere Teilchendurchmesser im Bereich von 0,1 bis 5 µm, insbesondere 0,1 bis 3 µm und vor allem 0,1 bis 1 µm.

Bei den organischen Pigmenten handelt es sich üblicherweise um organische Bunt- oder Schwarzpigmente. Anorganische Pigmente können Farbpigmente (Bunt-, Schwarz- und Weißpigmente) oder Glanzpigmente sein.

Im Folgenden seien als Beispiele für geeignete organische Buntpigmente genannt:
Monoazopigmente, Disazopigmente, Disazokondensationspigmente, Anthanthronpigmente, Anthrachinonpigmente, Anthrapyrimidinpigmente, Chinacridonpigmente, Chinophthalonpigmente, Diketopyrrolopyrrolpimgente, Dioxazinpigmente, Flavanthronpigmente, Indanthronpigmente, Isoindolinpigmente, Isoindolinonpigmente, Isoviolanthronpigmente, Metallkomplexpigmente, Perinonpigmente, Perylenpigmente, Phthalocyaninpigmente, Pyranthronpigmente, Pyrazolochinazolonpigmente, Thioindigopigmente, Triarylcarboniumpigmente.

Geeignete anorganische Buntpigmente sind anorganische Metallverbindungen wie Metalloxide und -sulfide, die auch mehr als ein Metall enthalten können. Zu diesen anorganischen Pigmenten zählen Titandioxid (C.I. Pigment White 6), Zinkweiß, Farbenzinkoxid; Zinksulfid, Lithopone; Eisenoxidschwarz (C.I. Pigment Black 11), Eisen-Mangan-Schwarz, Spinellschwarz (C.I. Pigment Black 27); Ruß (C.I. Pigment Black 7) als Weiß- beziehungsweise Schwarzpigmente. Als Buntpigmente können verwendet werden Chromoxid, Chromoxidhydratgrün; Chromgrün (C.I. Pigment Green 48); Cobaltgrün (C.I. Pigment Green 50); Ultramaringrün, Kobaltblau (C.I. Pigment Blue 28 und 36; C.I. Pigment Blue 72), Ultramarinblau, Manganblau, Ultramarinviolett, Kobalt- und Manganviolett, Eisenoxidrot (C.I. Pigment Red 101), Cadmiumsulfoselenid (C.I. Pigment Red 108), Cersulfid (C.I. Pigment Red 265), Molybdatrot (C.I. Pigment Red 104), Ultramarinrot, Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb C.I. Pigment Brown 24), Chromorange; Cersulfid (C.I. Pigment Orange 75), Eisenoxidgelb (C.I. Pigment Yellow 42), Nickeltitangelb (C.I. Pigment Yellow 53; C.I. Pigment Yellow 157, 158, 159, 160, 161, 162, 163, 164 und 189), Chromtitangelb, Spinellphasen (C.I. Pigment Yellow 119), Cadmiumsulfid und Cadmiumzinksulfid (C.I. Pigment Yellow 37 und 35); Chromgelb (C.I. Pigment Yellow 34), Bismutvanadat (C.I. Pigment Yellow 184).

Als Substrat (B) verwendete HDF oder MDF können in einer Ausführungsform der vorliegenden Erfindung ein oder mehrere Glanzpigmente enthalten.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Erfindungsgemäß kann als Substrat (B) verwendete HDF oder MDF mit einem Farbstoff gefärbt sein. Geeignet sind dabei insbesondere Farbstoffe, die in Wasser oder einem mit Wasser mischbaren oder in Wasser löslichen organischen Lösungsmittel löslich sind. Geeignet sind insbesondere kationische und anionische Farbstoffe, wobei kationische Farbstoffe bevorzugt sind.

Geeignete kationische Farbstoffe entstammen insbesondere der Di- und Triarylmethan-, Xanthen-, Azo-, Cyanin-, Azacyanin-, Methin-, Acridin-, Safranin-, Oxazin-, Indulin-, Nigrosin- und Phenazin-Reihe, wobei Farbstoffe aus der Azo-, Triarylmethan- und Xanthenreihe bevorzugt sind.

Im Einzelnen seien beispielhaft aufgeführt: C.I. Basic Yellow 1, 2 und 37; C.I. Basic Orange 2; C.I. Basic Red 1 und 108; C.I. Basic Blue 1, 7 und 26; C.I. Basic Violet 1, 3, 4, 10, 11 und 49; C.I. Basic Green 1 und 4; C.I. Basic Brown 1 und 4.

Kationische Farbstoffe können auch externe basische Gruppen enthaltende Farbmittel sein. Geeignete Beispiele sind hier C.I. Basic Blue 15 und 161.

Als kationische Farbstoffe können auch die korrespondierenden Farbbasen in Gegenwart von löslich machenden sauren Agenzien eingesetzt werden. Als Beispiele seien genannt: C.I. Solvent Yellow 34; C.I. Solvent Orange 3; C.I. Solvent Red 49; C.I. Solvent Violet 8 und 9; C.I. Solvent Blue 2 und 4; C.I. Solvent Black 7.

Geeignete anionische Farbstoffe sind insbesondere sulfonsäuregruppenhaltige Verbindungen aus der Reihe der Azo-, Anthrachinon-, Metallkomplex-, Triarylmethan-, Xanthen- und Stilbenreihe, wobei Farbstoffe aus der Triarylmethan-, Azo- und Metallkomplex- (vor allem Kupfer-, Chrom- und Kobaltkomplex-) Reihe bevorzugt sind.

Im einzelnen genannt seien beispielsweise: C.I. Acid Yellow 3, 19, 36 und 204; C.I. Acid Orange 7, 8 und 142; C.I. Acid Red 52, 88, 351 und 357; C.I. Acid Violet 17 und 90; C.I. Acid Blue 9, 193 und 199; C.I. Acid Black 194; anionische Chromkomplexfarbstoffe wie C.I. Acid Violet 46, 56, 58 und 65; C.I. Acid Yellow 59; C.I. Acid Orange 44, 74 und 92; C.I. Acid Red 195; C.I. Acid Brown 355 und C.I. Acid Black 52; anionische Kobaltkomplexfarbstoffe wie C.I. Acid Yellow 119 und 204, C.I. Direct Red 80 und 81.

Bevorzugt sind wasserlösliche Farbstoffe.

Als Wasserlöslichkeit vermittelnde Kationen sind dabei insbesondere Alkalimetallkationen, wie Li⁺, Na⁺, K⁺, Ammonium- und substituierte Ammoniumionen, insbesondere Alkanolammoniumionen, zu nennen.

In einer bevorzugten Ausführungsform enthält als Substrat (B) verwendete HDF oder MDF als farbgebende Komponente mindestens ein Pigment und, bezogen auf Pigment, 0,1 bis 10 Gew.-% mindestens eines Farbstoffs.

Bevorzugt weisen eingesetzte Farbstoffe einen dem jeweiligen Pigment jeweils vergleichbaren Farbton auf, da auf diese Weise eine besonders intensive Färbung der MDF bzw. HDF erzielbar ist. Es können jedoch auch im Farbton abweichende Farbstoffe eingesetzt werden, wodurch Nuancierungen der Färbung möglich sind.

In einer besonders bevorzugten Ausführungsform der Erfindung werden für Substrat (B) der erfindungsgemäßen mehrschichtigen Körper verwendete MDF und HDF mittels einer flüssigen Farbmittelzubereitung gefärbt. Geeignete flüssige Farbmittelzubereitungen sind in WO 2004/035276 beschrieben. Flüssige Farbmittelzubereitungen können enthalten:
i mindestens ein Pigment
ii mindestens einen Farbstoff
iii mindestens ein Dispergiermittel
iv Wasser oder ein Gemisch aus Wasser und mindestens einem Wasserrückhaltemittel und
v gegebenenfalls weitere für Farbmittelzubereitungen übliche Bestandteile.

In der Regel enthalten zu verwendende flüssige Farbmittelzubereitungen 10 bis 70 Gew.-%, vorzugsweise 10 bis 60 Gew.-% Pigment, bezogen auf die betreffende flüssige Farbmittelzubereitung.

Farbstoff ist in zu verwendender flüssiger Farbmittelzubereitung im Allgemeinen in Mengen von 0,1 bis 25 Gew.-%, vorzugsweise 1 bis 20 Gew.-%, jeweils bezogen auf Pigment, vorhanden. Bezogen auf das Gesamtgewicht der Zubereitung entspricht dies Mengen von in der Regel 0,01 bis 7 Gew.-%, vor allem 0,1 bis 5,6 Gew.-%. Die zu verwendenden flüssigen Farbmittelzubereitungen weisen vorzugsweise einen Gehalt an Dispergiermittel von 1 bis 50 Gew.-%, insbesondere von 1 bis 40 Gew.-% auf, bezogen auf flüssige Farbmittelzubereitung.

Für die Farbstoffe und Pigmente, die in flüssiger Farbmittelzubereitung verwendet werden können, gilt das vorstehend für zu verwendende Farbstoffe und Pigmente Gesagte.

Besonders geeignete Dispergiermittel sind nichtionische und anionische oberflächenaktive Additive sowie auch Mischungen dieser Additive.

Bevorzugte nichtionische oberflächenaktive Additive basieren insbesondere auf Polyethern.

Neben den ungemischten Polyalkylenoxiden, bevorzugt C₂-C₄-Alkylenoxiden und phenylsubstituierten C₂-C₄-Alkylenoxiden, insbesondere Polyethylenoxiden, Polypropylenoxiden und Poly(phenylethylenoxiden), sind vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide geeignet.

Bevorzugte anionische oberflächenaktive Additive basieren auf Sulfonaten, Sulfaten, Phosphonaten oder Phosphaten.

Eine weitere wichtige Gruppe anionischer oberflächenaktiver Additive bilden die Sulfonate, Sulfate, Phosphonate und Phosphate der als nichtionische Additive genannten Polyether.

Weitere geeignete anionische oberflächenaktive Additive basieren auf wasserlöslichen carboxylatgruppenhaltigen Polymeren. Diese können durch Einstellung des Verhältnisses zwischen enthaltenen polaren und unpolaren Gruppierungen vorteilhaft an den jeweiligen Anwendungszweck und das jeweilige Pigment angepasst werden.

Wasser bildet das flüssige Trägermaterial der erfindungsgemäß zu verwendenden Farbmittelzubereitungen.

Vorzugsweise enthalten flüssige Farbmittelzubereitungen ein Gemisch von Wasser und einem Wasserrückhaltemittel als flüssige Phase. Als Wasserrückhaltemittel dienen insbesondere organische Lösungsmittel, die schwer verdampfbar sind (d. h. in der Regel einen Siedepunkt > 100°C bei Atmosphärendruck haben), daher wasserrückhaltend wirken, und in Wasser löslich oder mit Wasser mischbar sind.

Beispiele für geeignete Wasserrückhaltemittel sind mehrwertige Alkohole, bevorzugt unverzweigte und verzweigte mehrwertige Alkohole mit 2 bis 8, insbesondere 3 bis 6, C-Atomen, wie Ethylenglykol, 1,2- und 1,3-Propylenglykol, Glycerin, Erythrit, Pentaerythrit, Pentite, wie Arabit, Adonit und Xylit, und Hexite, wie Sorbit, Mannit und Dulcit. Weiterhin eignen sich z.B. auch Di-, Tri- und Tetraalkylenglykole und deren Mono- (vor allem C₁-C₆-, insbesondere C₁-C₄-)alkylether. Beispielhaft seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

In der Regel enthalten flüssige Färbmittelzubereitungen 10 bis 88,95 Gew.-%, vorzugsweise 10 bis 80 Gew.-%, Wasser oder ein Gemisch aus Wasser und Wasserrückhaltemittel. Liegt Wasser im Gemisch mit einem organischen Lösungsmittel als Wasserrückhaltemittel vor, so macht dieses organische Lösungsmittel im Allgemeinen 1 bis 80 Gew.-%, bevorzugt 1 bis 60 Gew.-%, der flüssigen Phase aus.

Weiterhin können flüssige Farbmittelzubereitungen noch Zusatzstoffe wie Biozide, Entschäumer, Antiabsetzmittel und Rheologiemodifizierer, enthalten, deren Anteil im Allgemeinen bis zu 5 Gew.-% betragen kann, bezogen auf flüssige Farbmittelzubereitung.

Flüssige Farbmittelzubereitungen können auf verschiedene Weise erhalten werden. Vorzugsweise wird zunächst eine Pigmentdispersion hergestellt, der der Farbstoff dann als Feststoff oder insbesondere in gelöster Form zugegeben wird.

Flüssige Farbmittelzubereitungen eignen sich hervorragend zur Einfärbung von MDF- und HDF-Platten.

Flüssige Farbmittelzubereitungen können dabei dem als Basis für die MDF- und HDF-Platten dienenden Gemisch aus Holzfasern und Bindemittel auf verschiedene Weise und an verschiedenen Stellen des Fabrikationsprozesses zugesetzt werden. Für weitere Details wird auf WO 2008/055535 verwiesen.

Als Substrat (B) verwendete HDF oder MDF können in einem Ton durchgefärbt werden.

Besonders attraktive Farbeffekte sind durch Mischen verschieden gefärbter Holzfasern und anschließendes Verpressen erzielbar. Hierbei können beispielsweise marmorierte oder gesprenkelte Faserplatten erhalten werden. Besondere Effekte können durch mehrfarbige Einfärbung der Holzfasern erhalten werden. Zum Beispiel können verschieden gefärbte Holzfasern schichtweise verpresst werden. Solche Effekte lassen sich auch erreichen, wenn nur ein gewisser Prozentsatz der Holzfasern eingefärbt wird und der andere Teil seine ursprüngliche Farbe behält.

Erfindungsgemäße mehrschichtige Körper umfassen weiterhin eine metallhaltige Schicht (C), die durchgängig oder vorzugsweise nicht durchgängig sein kann. Dabei wird unter durchgängig auch vollflächig verstanden. Nicht durchgängige metallhaltige Schichten (C) weisen an einigen Stellen Metall auf und an anderen Stellen nicht. Metall kann in Form von unregelmäßigen oder vorzugsweise regelmäßigen Mustern aufgebracht sein.

In einer Ausführungsform der vorliegenden Erfindung weist metallhaltige Schicht (C) eine mittlere Dicke im Bereich von 10 µm bis 1 mm, bevorzugt 100 bis 200 µm auf.

Metallhaltige Schicht (C) lässt sich am besten durch den Herstellungsprozess beschreiben. Der Herstellungsprozess umfasst mehrere Schritte:
(a) Bedrucken von Dekorschicht (A) oder eines Teils von Dekorschicht (A) mit einer Druckformulierung, die mindestens ein Metallpulver enthält,
(b) Abscheiden mindestens eines weiteren Metalls.

Abdeckschicht (D) ist eine Schicht, die dekorativ wirken kann oder schützende Wirkung haben kann.

In einer Ausführungsform der vorliegenden Erfindung handelt es sich bei Abdeckschicht (D) um ein Overlay, eine aus einer oder mehreren mit Harz getränkten Schicht(en) Papier, Textil oder Kunststofffolie.

In einer Ausführungsform der vorliegenden Erfindung ist Harz gewählt aus Harnstoff-Formaldehyd-Harzen, Melamin-Formaldehyd-Harzen, Harnstoff-Melamin-Formaldehyd-Harzen, aus mit Phenol verstärkten Harnstoff-Formaldehyd-Harzen oder aus mit Phenol verstärkten Harnstoff-Melamin-Formaldehyd-Harzen.

Harz kann mit einem oder mehreren Härtern versetzt sein, beispielsweise Ammoniumsalzen von starken organischen Säuren, insbesondere von Sulfonsäuren. Dabei ist Ammonium gewählt aus unsubstituierten und-bevorzugt substituierten Ammonium, insbesondere Triethylammonium und Morpholinium. Das Aushärten des Harzes wird durch die Zugabe von Härter unterstützt.

In einer Ausführungsform der vorliegenden Erfindung wählt man Abdeckschicht (D) aus Kunststofffolien, Papier oder Textil.

Unter Kunststofffolien versteht man im Rahmen der vorliegenden Erfindung Flächengebilde aus synthetischem Polymer, die eine Dicke von 0,5 µm bis 1 mm, vorzugsweise 1 µm bis 0,5 mm und besonders bevorzugt bis maximal 0,15 mm aufweisen können.

Vorzugsweise ist Kunststofffolie manuell biegbar, das heißt ohne Zuhilfenahme eines Werkzeugs.

Unter synthetischen Polymeren sind Polyolefine wie Polyolefine wie Polyethylen und Polypropylen, weiterhin Polyester, Polyamid, Polycarbonat, Polyvinylchlorid, Polymethylmethacrylat und Polystyrol bevorzugt, wobei unter Polyolefinen wie Polyethylen und Polypropylen nicht nur die betreffenden Ethylen- und Propylenhomopolymere, sondern auch Copolymere mit anderen Olefinen wie beispielsweise Acrylsäure oder 1-Olefinen zu verstehen sind. So sind unter Polyethylen insbesondere Ethylencopolymere mit 0,1 bis unter 50 Gew.-% eines oder mehrerer 1-Olefine wie Propylen, 1-Buten, 1-Penten, 1-Hexen, 1-Octen, 1-Decen oder 1-Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1-Buten, 1-Penten, 1-Hexen, 1-Octen, 1-Decen oder 1-Dodecen zu verstehen, wobei Ethylen, 1-Buten und 1-Hexen bevorzugt sind. Unter Polypropylen ist dabei bevorzugt im wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Nylon 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Besonders bevorzugt handelt es sich bei Abdeckschicht um Textil. Textil setzt man im Rahmen der vorliegenden Erfindung als textiles Flächengebilde ein, beispielsweise als Gewirke, Strickwaren oder bevorzugt als Gewebe oder Vliesstoff (Non-Wovens). Textil im Sinne der vorliegenden Erfindung kann flexibel oder steif sein. Vorzugsweise handelt es sich bei Textil um solche textile Flächengebilde, die man ein- oder mehrmals beispielsweise manuell biegen kann, ohne dass man visuell einen Unterschied zwischen vor dem Biegen und nach der Rückstellung aus dem gebogenen Zustand feststellen kann.

Textil im Sinne der vorliegenden Erfindung kann aus Naturfasern oder synthetischen Fasern oder Gemischen von Naturfasern und synthetischen Fasern sein. An Naturfasern seien beispielsweise Wolle, Flachs und bevorzugt Baumwolle zu nennen. An synthetischen Fasern seien beispielsweise Polyamid, Polyester, modifiziertes Polyester, Polyestermischgewebe, Polyamidmischgewebe, Polyacrylnitril, Triacetat, Acetat, Polycarbonat, Polypropylen, Polyvinylchlorid, Polyestermikrofasern.gehannt, bevorzugt sind Polyester und Mischungen von Baumwolle mit synthetischen Fasern, insbesondere Mischungen von Baumwolle und Polyester.

Zur Herstellung von Schicht (C) bedruckt man Dekorschicht (A) oder einen Teil von Dekorschicht (A) in Schritt (a) mit einer Druckformulierung, vorzugsweise einer wässrigen Druckformulierung, die mindestens ein Metallpulver enthält, wobei das betreffende Metall in der elektrochemischen Spannungsreihe der Elemente ein stärker negatives Normalpotenzial aufweist als Wasserstoff.

Beispiele für Druckformulierungen sind Druckfarben, z. B. Tiefdruckfarben, Flexodruckfarben, Offsetdruckfarben, Buchdruckfarben, Drucktinten wie z. B. Tinten für das Valvolineverfahren oder das Ink-Jet-Verfahren. Bevorzugt sind Druckpasten, vorzugsweise wässrige Druckpasten.

Metallpulver aus Druckformulierung von Schritt (a) wird im Rahmen der vorliegenden Erfindung auch kurz als Metallpulver (a) bezeichnet.

Metallpulver (a) kann beispielsweise gewählt werden aus pulverförmigem Zn, Ni, Cu, Ag, Sn, Co, Mn, Fe, Mg, Pb, Cr und Bi, beispielsweise rein oder als Gemische oder in Form von Legierungen der genannten Metalle untereinander oder mit anderen Metallen. Geeignete Legierungen sind beispielsweise CuZn, CuSn, CuNi, SnPb, SnBi, SnCu, NiP, ZnFe, ZnNi, ZnCo und ZnMn. Bevorzugt einsetzbare Metallpulver (a) umfassen nur ein Metall, besonders bevorzugt sind Eisenpulver und Kupferpulver, ganz besonders bevorzugt Eisenpulver.

In einer Ausführungsform der vorliegenden Erfindung hat Metallpulver (a) einen mittleren Teilchendurchmesser von 0,001 bis 100 µm, bevorzugt von 0,05 bis 50 µm, besonders bevorzugt von 0,1 bis 10 µm (bestimmt durch Laserbeugungsmessung, beispielsweise an einem Gerät Microtrac X100).

In einer Ausführungsform ist Metallpulver (a) durch seine Partikeldurchmesserverteilung gekennzeichnet. Beispielsweise kann der Wert d₁₀ im Bereich von 0,001 bis 5 µm liegen, der Wert für d₅₀ im Bereich von 1 bis 10 µm und der Wert für d₉₀ im Bereich von 3 bis 100 µm, wobei gilt: d₁₀ < d₅₀ < d₉₀. Dabei hat vorzugsweise kein Partikel einen größeren Durchmesser als 100 µm.

Metallpulver (a) kann man in passivierter Form einsetzen, beispielsweise in einer zumindest partiell beschichteten ("gecoateten") Form. Als geeignete Beschichtungen seien beispielsweise anorganische Schichten wie Oxid des betreffenden Metalls, SiO₂ bzw. SiO₂·aq oder Phosphate beispielsweise des betreffenden Metalls genannt.

Die Partikel von Metallpulver (a) können grundsätzlich jede beliebige Form aufweisen, beispielsweise sind nadelförmige, plattenförmige oder kugelförmige Partikel einsetzbar, bevorzugt sind kugel- und plattenförmige.

In besonders bevorzugter Weise werden Metallpulver (a) mit kugelförmigen Partikeln, bevorzugt überwiegend mit kugelförmigen Partikeln, ganz besonders bevorzugt sogenannte Carbonyleisenpulver mit kugelförmigen Partikeln, verwendet.

In einer Ausführungsform der vorliegenden Erfindung kann man Metallpulver (a) in Mischung mit Kohlenstoffverbindungen verwenden, insbesondere solchen, die im wesentlichen aus Kohlenstoff bestehen, beispielsweise Farbruße. Besonders bevorzugt sind dabei elektrisch leitfähige Kohlenstoffverbindungen wie Leitruße, Kohlenstoffnanoröhren oder Graphene.

Metallpulver (a) kann man in einer Ausführungsform von Schritt (a) so verdrucken, dass die Partikel von Metallpulver so dicht liegen, dass sie bereits zum Leiten von Strom in der Lage sind. In einer anderen Ausführungsform von Schritt (a) kann man so verdrucken, dass die Partikel von Metallpulver (a) so weit voneinander entfernt sind, dass sie nicht zum Leiten des Stroms in der Lage sind.

Die Herstellung von Metallpulvern (a) ist an sich bekannt. Man kann beispielsweise gängige Handelswaren oder nach an sich bekannten Verfahren hergestelltes Metallpulver (a) einsetzen, beispielsweise durch elektrolytische Abscheidung oder chemische Reduktion aus Lösungen von Salzen der betreffenden Metalle oder durch Reduktion eines oxidischen Pulvers beispielsweise mittels Wasserstoff, durch Versprühen oder- Verdüsen einer Metallschmelze, insbesondere in Kühlmedien, beispielsweise Gasen oder Wasser.

Besonders bevorzugt verwendet man solches Metallpulver (a), das durch thermische Zersetzung von Eisenpentacarbonyl hergestellt wurde, im Rahmen der vorliegenden Erfindung auch Carbonyleisenpulver genannt.

Die Herstellung von Carbonyleisenpulver durch thermische Zersetzung von insbesondere Eisenpentacarbonyl Fe(CO)₅ wird beispielsweise in Ullmann's Encyclopedia of Industrial Chemistry, 5th Edition, Volume A14, Seite 599, beschrieben. Die Zersetzung des Eisenpentacarbonyls kann beispielsweise bei Normaldruck und beispielsweise bei erhöhten Temperaturen, z. B. im Bereich von 200 bis 300°C, z. B. in einem beheizbaren Zersetzer erfolgen, der ein Rohr aus einem hitzebeständigen Material wie Quarzglas oder V2A-Stahl in vorzugsweise vertikaler Position umfasst, das von einer Heizeinrichtung, beispielsweise bestehend aus Heizbändern, Heizdrähten oder aus einem von einem Heizniedium durchströmten Heizmantel, umgeben ist.

Der mittlere Teilchendurchmesser von Carbonyleisenpulver kann durch die Verfahrensparameter und Reaktionsführung bei der Zersetzung in weiten Bereichen gesteuert werden und liegt (Zahlenmittel) in der Regel bei 0,01 bis 100 µm, bevorzugt von 0,1 bis 50 µm, besonders bevorzugt von 1 bis 8 µm.

In einer Ausführungsform druckt man in Schritt (a) ein Muster von Metallpulver (a) auf, indem man Dekorschicht (A) oder einen Teil von Dekorschicht (A) an einigen Stellen mit Druckformulierung bedruckt, die Metallpulver (a) enthält, und an anderen Stellen nicht. Vorzugsweise verdruckt man solche Muster, bei denen Metallpulver (a) in Form von geraden oder vorzugsweise gebogenen Streifenmustern oder Linienmustern auf Dekorschicht (A) oder einem Teil von Dekorschicht (A) angeordnet sind, wobei die genannten Linien beispielsweise eine Breite und Dicke jeweils im Bereich von 0,1 µm bis 5 mm und die genannten Streifen eine Breite im Bereich von 5,1 mm bis beispielsweise 10 cm oder gegebenenfalls mehr und eine Dicke von 0,1 µm bis 5 mm haben können.

In einer speziellen Ausführungsform der vorliegenden Erfindung verdruckt man solche Streifenmuster oder Linienmuster von Metallpulver (a), bei denen sich die Streifen bzw. Linien weder berühren noch schneiden.

In einer anderen speziellen Ausführungsform der vorliegenden Erfindung verdruckt man solche Streifenmuster oder Linienmuster von Metallpulver (a), bei denen sich die Streifen bzw. Linien kreuzen, beispielsweise dann, wenn man aufgedruckte Schaltkreise herstellen will.

In einer Ausführungsform der vorliegenden Erfindung bedruckt man in Schritt (a) nach verschiedenen Verfahren, die an sich bekannt sind. In einer Ausführungsform der vorliegenden Erfindung verwendet man eine Schablone, durch die man die Druckformulierung, die Metallpulver (a) enthält, mit einer Rakel presst. Das vorstehend beschriebene Verfahren gehört zu den Siebdruckverfahren. Weitere geeignete Druckverfahren sind Tiefdruckverfahren und Flexodruckverfahren. Ein weiteres geeignetes Druckverfahren ist gewählt aus Valve-Jet-Verfahren. Bei Valve-Jet-Verfahren verwendet man solche Druckformulierung, die vorzugsweise keine Verdickungsmittel enthält.

In Schritt (b) der Herstellung von Schicht (C) scheidet man mindestens ein weiteres Metall ab. Dabei ist es in Schritt (b) möglich, ein oder mehrere weitere Metalle abzuscheiden, bevorzugt scheidet man nur ein weiteres Metall ab.

Zur Durchführung des erfindungsgemäßen Verfahrens scheidet man in Schritt (b) ein weiteres Metall auf Dekorschicht (A) oder dem betreffenden Teil von Dekorschicht (A) ab. Unter "Dekorschicht (A)" ist dabei die Dekorschicht (A) oder der betreffende Teil von Dekorschicht (A) zu verstehen, die bzw. den man zuvor nach den Schritten (a) bis (c) und gegebenenfalls weiteren Schritten wie beispielsweise (d) bearbeitet hat.

In einer Ausführungsform der vorliegenden Erfindung wählt man als Metallpulver (a) in Schritt (a) Carbonyleisenpulver und als weiteres Metall in Schritt (b) Silber, Gold, Nickel oder insbesondere Kupfer.

In einer Ausführungsform der vorliegenden Erfindung, im Folgenden auch als Schritt (b1) bezeichnet, geht man so vor, dass man in Schritt (b1) ohne externe Spannungsquelle arbeitet und dass das weitere Metall in Schritt (b1) in der elektrochemischen Spannungsreihe der Elemente, in alkalischer oder vorzugsweise in saurer Lösung, ein stärker positives Normalpotenzial aufweist als Metall, das Metallpulver (a) zugrunde liegt, und als Wasserstoff.

Dazu kann man beispielsweise so vorgehen, dass man in Schritt (a) bedruckte und gegebenenfalls in einem Schritt (c) mit elektrischen Artikeln versehene Dekorschicht (A) bzw. Teil von Dekorschicht (A) mit einer basischen, neutralen oder vorzugsweise sauren vorzugsweise wässrigen Lösung von Salz von weiterem Metall und gegebenenfalls einem oder mehreren Reduktionsmitteln behandelt, beispielsweise indem man sie in die betreffende Lösung einlegt.

In einer Ausführungsform der vorliegenden Erfindung behandelt man in Schritt (b1) im Bereich von 0,5 Minuten bis zu 12 Stunden, bevorzugt bis zu 30 Minuten.

In einer Ausführungsform der vorliegenden Erfindung behandelt man in Schritt (b1) mit einer basischen, neutralen oder vorzugsweise sauren Lösung von Salz von weiterem Metall, die eine Temperatur im Bereich von 0 bis 100°C, bevorzugt 10 bis 80°C aufweist.

Zusätzlich kann man in Schritt (b1) ein oder mehrere Reduktionsmittel zusetzen. Wählt man beispielsweise Kupfer als weiteres Metall, so kann man als Reduktionsmittel beispielsweise Aldehyde, insbesondere reduzierende Zucker oder Formaldehyd als Reduktionsmittel zusetzen. Wählt man beispielsweise Nickel als weiteres Metall, so kann man beispielsweise Alkalihypophosphit, insbesondere NaH₂PO₂·2H₂O, oder Boranate, insbesondere NaBH₄, als Reduktionsmittel zusetzen.

In einer anderen Ausführungsform, im Folgenden auch als Schritt (b2) bezeichnet, der vorliegenden Erfindung geht man so vor, dass man in Schritt (b2) mit externer Spannungsquelle arbeitet und dass das weitere Metall in Schritt (b2) in der elektrochemischen Spannungsreihe der Elemente in saurer oder alkalischer Lösung ein stärker oder schwächer positives Normalpotenzial aufweisen kann als Metall, das Metallpulver (a) zugrunde liegt. Vorzugsweise kann man dazu als Metallpulver (a) Carbonyleisenpulver und als weiteres Metall Nickel, Zink oder insbesondere Kupfer wählen. Dabei beobachtet man für den Fall, dass das weitere Metall in Schritt (b2) in der elektrochemischen Spannungsreihe der Elemente ein stärker positives Normalpotenzial aufweist als Wasserstoff und als Metall, das Metallpulver (a) zugrunde liegt, dass zusätzlich weiteres Metall in Analogie zu Schritt (b1) abgeschieden wird.

Zur Durchführung von Schritt (b2) kann man beispielsweise einen Strom mit einer Stärke im Bereich von 10 bis 100 A, bevorzugt 12 bis 50 A anlegen.

In einer Variante von Schritt (b2) arbeitet man mit einer Stromdichte im Bereich von 0,05 bis 50 A/dm², bevorzugt 0,1 bis 30 A/dm².

Zur Durchführung von Schritt (b2) kann man beispielsweise über einen Zeitraum von 10 Minuten bis 160 Stunden unter Verwendung einer externen Spannungsquelle arbeiten.

In einer Ausführungsform der vorliegenden Erfindung kombiniert man Schritt (b1) und Schritt (b2) in der Weise, dass man zunächst ohne und danach mit externer Spannungsquelle arbeitet und dass das weitere Metall in Schritt (b) in der elektrochemischen Spannungsreihe der Elemente ein stärker positives Normalpotenzial aufweist kann als Metall, das Metallpulver (a) zugrunde liegt.

In einer Ausführungsform der vorliegenden Erfindung setzt man der Lösung von weiterem Metall einen oder mehrere Hilfsstoffe zu. Als Hilfsstoffe seien beispielhaft genannt: Puffer, Tenside, Polymere, insbesondere partikelförmige Polymere, deren Partikeldurchmesser im Bereich von 10 nm bis 10 µm liegt, Entschäumer, ein oder mehrere organische Lösungsmittel, ein oder mehrere Komplexbildner.

Besonders geeignete Puffer sind Essigsäure/Acetat-Puffer.

Besonders geeignete Tenside sind gewählt aus kationischen, anionischen und insbesondere nicht-ionischen Tensiden.

Als kationische Tenside seien beispielhaft genannt: einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Läurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid.

Beispiele für geeignete anionische Tenside sind Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈), von Alkylarylsulfonsäuren (Alkylrest: C₉-C₁₈) und von Sulfosuccinaten wie beispielsweise Sulfobernsteinsäuremono- oder diestern. Bevorzugt sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37.

Besonders bevorzugt sind nichtionische Tenside wie beispielsweise ein- oder vorzugsweise mehrfach alkoxylierte C₁₀-C₃₀-Alkanole, bevorzugt mit drei bis hundert Mol C₂-C₄-Alkylenoxid, insbesondere Ethylenoxid alkoxylierte Oxo- oder Fettalkohole.

Geeignete Entschäumer sind beispielsweise silikonhaltige Entschäumer wie beispielsweise solche der Formel HO-(CH₂)₃-Si(CH₃)[OSi(CH₃)₃]₂ und HO-(CH₂)₃-Si(CH₃)[OSi(CH₃)₃][OSi(CH₃)₂OSi(CH₃)₃], nicht alkoxyliert oder mit bis zu 20 Äquivalenten Alkylenoxid und insbesondere Ethylenoxid alkoxyliert. Auch Silikon-freie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₀-Alkyl unverzweigt oder verzweigt sein kann.

Geeignete Komplexbildner sind solche Verbindungen, die Chelate bilden. Bevorzugt sind solche Komplexbildner, die gewählt sind aus Aminen, Diaminen und Triaminen, die mindestens eine Carbonsäuregruppe tragen. Beispielhaft seien Nitrilotriessigsäure, Ethylendiamintetraessigsäure und Diethylenpentaaminpentaessigsäure sowie die korrespondierenden Alkalimetallsalze genannt.

In einer Ausführungsform der vorliegenden Erfindung scheidet man so viel weiteres Metall ab, dass man eine Schichtdicke im Bereich von 100 nm bis 500 µm, bevorzugt von 1 µm bis 100 µm, besonders bevorzugt 2 µm bis 50 µm erzeugt.

Bei der Durchführung von Schritt (b) wird Metallpulver (a) in den meisten Fällen partiell oder vollständig durch weiteres Metall ersetzt, wobei die Morphologie von weiterem abgeschiedenem Metall nicht identisch mit der Morphologie von Metallpulver (a) zu sein braucht.

Nach der Beendigung des Abscheidens von weiterem Metall (b) erhält man Schicht (C) auf Dekorschicht (A) bzw. Teil von Dekorschicht (A), die bzw. den man noch ein- oder mehrmals spülen kann, beispielsweise mit Wasser.

In einer Ausführungsform der vorliegenden Erfindung kann man zur Herstellung von Schicht (C) weiterhin als Schritt
(c) Versehen mit mindestens einem Artikel, der elektrischen Strom erzeugt oder verbraucht
durchführen, und zwar nach dem Abscheiden von weiterem Metall (b) oder vorzugsweise nach dem Bedrucken gemäß Schritt (a), aber vor dem Abscheiden mit weiterem Metall (b). Das Versehen mit mindestens einem Artikel, der elektrischen Strom erzeugt oder verbraucht, wird auch kurz als Schritt (c) bezeichnet.

In Schritt (c) versieht man die mit Metallpulver (a) bedruckte Dekorschicht (A) oder einen mit Metallpulver (a) bedruckten Teil von Dekorschicht (A) mit mindestens einem Artikel, der elektrischen Strom erzeugt oder verbraucht, im Rahmen der vorliegenden Erfindung kurz auch als elektrischen Artikel bezeichnet. Bevorzugt versieht man mit mindestens zwei elektrischen Artikeln, besonders bevorzugt mit im Bereich von 2 bis 50.

In einer Ausführungsform von Schritt (c) fixiert man den oder die elektrischen Artikel auf Dekorschicht (A) oder dem betreffenden Teil von Dekorschicht (A).

In einer Ausführungsform der vorliegenden Erfindung fixiert man in Schritt (c) an mindestens zwei Stellen, an denen in Schritt (a) Formulierung aufgebracht wurde, die Metallpulver (a) enthält, mindestens einen Artikel, der elektrischen Strom benötigt oder erzeugt.

Unter "mindestens zwei Stellen" seien im Rahmen der vorliegenden Erfindung solche Stellen des Musters aus Schritt (a) zu verstehen, die Metallpulver (a) oder abgeschiedenes Metall aus Schritt (b) aufweisen.

In einer Ausführungsform der vorliegenden Erfindung gehören jeweils zwei der in Schritt (a) bedruckten Stellen, auf denen man in Schritt (c) mindestens einen elektrischen Artikel fixiert, zu unterschiedlichen Teilen, beispielsweise Streifen des in Schritt (a) aufgedruckten Musters.

Vorzugsweise liegen jeweils zwei der in Schritt (c) genannten Stellen dicht beieinander, beispielsweise im Bereich von 0,1 bis 5 mm, bevorzugt bis 2 mm.

In einer Ausführungsform der vorliegenden Erfindung sind die in Schritt (c) fixierten elektrischen Artikel relativ klein, beispielsweise mit einem mittleren Durchmesser im Bereich von 1 bis 5 mm oder kleiner.

In einer anderen Variante der vorliegenden Erfindung handelt es sich bei in Schritt (c) fixierten Artikeln um Sensoren, welche als Annäherungssensoren verwendet werden können und die Abmessungen im Bereich von 1 bis 10 cm (Länge und Breite) sowie 1 bis 5 mm, bevorzugt bis 2 mm (Dicke) aufweisen.

In vielen Fällen weisen in Schritt (c) fixierten elektrischen Artikel eine mittlere Dicke im Bereich von 0,1 bis 5 mm auf.

In einer Ausführungsform der vorliegenden Erfindung haben elektrische Artikel mindestens zwei Stromanschlüsse, von denen je einer an der oben genannten Stelle fixiert wird.

Elektrische Artikel können unterschiedlicher Natur sein oder gleichartig.

In einer Ausführungsform der vorliegenden Erfindung wählt man elektrische Artikel aus Licht emittierenden Dioden, flüssigkristallinen Anzeigeelementen, Peltierelementen, Transistoren, elektrochromen Farbstoffen, resistiven Elementen, kapazitiven Elementen, induktiven Elementen, Dioden, Transistoren, Aktuatoren, elektromechanischen Elementen und Solarzellen.

Licht emittierenden Dioden, flüssigkristalline Anzeigeelemente, Peltierelemente, Transistoren, elektrochrome Farbstoffe, resistive Elemente, kapazitive Elemente, induktive Elemente, Dioden, Transistoren, Aktuatoren, elektromechanische Elemente und Solarzellen sind als solche bekannt und kommerziell erhältlich.

In einer Ausführungsform der vorliegenden Erfindung führt man das Fixieren von elektrischen Artikeln in an sich bekannten Montageverfahren und -anlagen durch. Beispiele für Montageverfahren und -anlagen sind zum Beispiel aus der Leiterplattenfertigung bekannt (Surface-Mount-Technologie). Bestückungsautomaten platzieren zum Beispiel einen oder mehrere elektrische Artikel an der jeweils gewünschten Stelle der nach Schritt (a) bedruckten Dekorschicht (A) oder des betreffenden Teils von Dekorschicht (A).

In einer Ausführungsform der vorliegenden Erfindung, in der hinreichend kleine elektrische Artikel fixiert werden sollen, geht man von in Gurten aus Karton oder Kunststoff verpackten elektrischen Artikeln aus. In den Gurten befinden sich Taschen, in welchen die elektrischen Artikel liegen. Die Oberseite der Tasche ist zum Beispiel durch eine Folie verschlossen, welche abgezogen werden kann, um die elektrischen Artikel zu entnehmen. Die Gurte selbst werden auf einer Rolle aufgewickelt. Auf zumindest einer Seite hat die Rolle in regelmäßigen Abständen Löcher, über die der Gurt vom Bestückungsautomaten bewegt werden kann. Diese Rollen werden mit Hilfe von Zufuhrmodulen, so genannten Feedern, dem Bestückungsautomaten zugeführt. Die elektrischen Artikel werden zum Beispiel mit Vakuumpinzetten oder Greifern entnommen und dann auf der Sollposition des textilen Substrats aufgesetzt. Dieser Vorgang wird für alle zu fixierenden elektrischen Artikel wiederholt.

Zur Herstellung von beispielsweise solchen erfindungsgemäßen metallisierten mehrschichtigen Körpern, die zur Herstellung von Anzeigeeinrichtungen verwendet werden sollen, kann man noch an den Enden auf an sich bekannte Weise Stromkabel befestigen, beispielsweise anlöten.

In einer Ausführungsform der vorliegenden Erfindung führt man zur Herstellung von Schicht (C) weiterhin als Schritt
(d) mindestens eine thermische Behandlung
durch.

Die thermische Behandlung (d) führt man vorzugsweise durch Erwärmen oder Erhitzen in trockenem Medium, beispielsweise im Gasstrom, durch.

In einem abschließenden Schritt der Herstellung von erfindungsgemäßen mehrschichtigen Körpern kann man die verschiedenen Schichten miteinander verpressen. Dazu kann man beispielsweise bei einem Druck im Bereich von 10 bis 80 bar, bevorzugt 20 bis 50 bar miteinander verpressen.

In einer Ausführungsform der vorliegenden Erfindung verpresst man bei einer Temperatur im Bereich von 120 bis 220°C, bevorzugt 150 bis 220°C.

In einer Ausführungsform der vorliegenden Erfindung verpresst man über einen Zeitraum im Bereich von 10 Sekunden bis mehrere Minuten beispielsweise bis 10 Minuten, bevorzugt 20 Sekunden bis eine Minute.

Statt unter den vorstehend genannten Bedingungen zu verpressen, kann man die verschiedenen Schichten mit an sich bekannten Klebstoffen verkleben. Wünscht man unter Verwendung von Klebstoff die verschiedenen Schichten zu verbinden, so kann es sinnvoll sein, die Schichten zusammenzudrücken.

Erfindungsgemäße mehrschichtige Körper weisen vorzügliche Eigenschaften auf. Sie lassen sich mechanisch bearbeiten, beispielsweise durch Fräsen, Bohren, Sägen, und man kann wie bei echtem Holz Kanten und Profile einarbeiten. Erfindungsgemäße mehrschichtige Körper kann man verkleben und zu größeren Elementen und Abdeckungen zusammensetzen.

Wenn man erfindungsgemäße mehrschichtige Körper mit Federn und Nuten versieht, kann man sie zu Paneelen verarbeiten, die sich wie Klick-Paneele leicht verlegen lassen.

Unter Verwendung von MDF oder HDF hergestellte erfindungsgemäße mehrschichtige Körper können eine zusätzliche Schicht (E) enthalten, die als Gegenzug dient und auch Gegenzug (E) genannt werden kann. Als zusätzliche Schicht (E) können alle für diesen Zweck bekannten Materialien verwendet werden, beispielsweise kann der Gegenzug (E) ein mit Melaminharz getränktes Papier sein, das auf die Unterseite der HDF-bzw. MDF-Plattenaufgepresst wird.

Gegebenenfalls enthalten unter Verwendung von MDF oder HDF hergestellte erfindungsgemäße mehrschichtige Körper eine als Nutzschicht dienende Schutzschicht, die auch Overlay genannt wird, und zwar auf bedruckter Dekorschicht (A) oder insbesondere auf bedrucktem Teil von Dekorschicht (A). Diese Schutzschicht kann ein mit Melaminharz getränktes, transparentes Papier sein, das auf die Oberseite der MDF- und HDF-Platten gepresst wird, oder eine Melaminharzschicht sein.

Falls es sich bei erfindungsgemäßen mehrschichtigen Körpern um Boden-Paneele handelt und man erfindungsgemäße Boden-Paneele mit einer Schutzschicht versehen will, werden der Gegenzug (E) und die Schutzschicht bevorzugt in einem Schritt aufgebracht. Vor oder nach dem Aufbringen des Gegenzugs (E) und gegebenenfalls der Schutzschicht kann die Sichtseite beispielsweise mittels Prägen, Stanzen oder Fräsen bearbeitet werden, so dass sie eine strukturierte Oberfläche erhält. Die Bearbeitung kann manuell und vorzugsweise mit mechanisch gesteuerten oder Maschinen oder mit CNC-Maschinen (Computerized Numerical Control) durchgeführt werden. Auf diese Weise können so genannte "Living surfaces" erzielt werden, die der Oberfläche von echtem Holz sehr nahe kommen. Auch können vertiefte Fugenprofile eingefräst werden.

Erfindungsgemäßer mehrschichtiger Körper kann auf seiner oberen Oberfläche, auch Sichtseite genannt, anderen Oberflächenbehandlungen unterzogen werden. Generell können alle aus dem Oberflächenschutz von Parkett bekannten Verfahren und Materialien zur Behandlung der Sichtseite von erfindungsgemäßen mehrschichtigen Körpern eingesetzt werden, beispielsweise UV-härtende Lacke, Pulverlackierungen und sonstige transparente Oberflächenbeschichtungen. Vor einer Oberflächenbehandlung kann die Sichtseite eine dreidimensionale Struktur erhalten, beispielsweise mittels Prägen, CNC-Verfahren, Stanzen oder Fräsen. In einer weiteren Ausführungsform der Erfindung wird die Sichtseite des erfindungsgemäßen mehrschichtigen Körpers nur dreidimensional strukturiert und keine weitere Oberflächenbehandlung durchgeführt. In einer weiteren Ausführungsform der vorliegenden Erfindung kann man die Sichtseite von erfindungsgemäßen mehrschichtigen Körpern schleifen, wachsen, ölen, beizen, lasieren oder auch lackieren, ohne eine weitere Dekorschicht (A) oder ein Overlay aufzubringen.

Erfindungsgemäße mehrschichtige Körper können weitere Schichten enthalten. Beispielsweise kann auf der Unterseite von erfindungsgemäßen mehrschichtigen Körpern eine Trittschalldämmung oder eine Wärmedämmung angebracht sein.

Erfindungsgemäße mehrschichtige Körper kann man in handelsübliche Maße teilen und auf einer Längs- und einer Querseite mit einer Nut und auf der jeweils gegenüberliegenden Längs- und Querseite mit einer zu der Nutz passenden Feder versehen. Dies lasst sich beispielsweise mittels Fräsen durchführen.

Erfindungsgemäße mehrschichtige Körper kann man für viele Anwendungen im Gebäude-Innenbereich und in Automobilen einsetzen. Beispiele für den GebäudeInnenbereich sind Paneele, insbesondere Fußboden-Paneele, weiterhin Fußböden, Wandverkleidungen und Decken. Beispiele für den Automobilbereich sind Armaturenbretter und Konsolen.

Wenn in erfindungsgemäßen mehrschichtigen Körpern leitfähige Linien in Mustern angeordnet sind, sind derartige Muster sehr flexibel zu ändern und zu ergänzen.

Außerdem sind erfindungsgemäße mehrschichtige Körper mechanisch sehr robust, zeigen nur geringe unerwünschte Selbstaufheizung und sind unempfindlich gegen elektrostatische Auf- oder Entladung. Weiterhin sind erfindungsgemäße mehrschichtige Körper leicht zu verlegen und können auch vom Heimwerker einfach verarbeitet werden.

Ein weiterer Gegenstand der vorliegenden Erfindung ist ein Verfahren zur Herstellung von mehrschichtigen Körpern, insbesondere von erfindungsgemäßen mehrschichtigen Körpern. Das erfindungsgemäße Verfahren, im Rahmen der vorliegenden Erfindung auch erfindungsgemäßes Herstellungsverfahren genannt, umfasst die folgenden Schritte:
Bereitstellen einer Dekorschicht (A) oder eines Teils von Dekorschicht (A),
   (a) Bedrucken mit einer Druckformulierung, die mindestens ein Metallpulver enthält,
   (b) Abscheiden von mindestens einem weiteren Metall,
   (c) gegebenenfalls Versehen mit mindestens einem Artikel, der elektrischen Strom erzeugt oder verbraucht, und zwar vorzugsweise nach dem Bedrucken gemäß Schritt (a), aber vor dem Abscheiden nach Schritt (b),
   (d) gegebenenfalls thermische Behandlung,
Aufbringen von mindestens einem Substrat (B), welches Cellulosefasern enthält, auf die derart mit einer metallhaltigen Schicht (C) versehene Dekorschicht (A) bzw. Teils von Dekorschicht (A),
das mit einer Abdeckschicht (D) versehen ist oder das man mit einer Abdeckschicht (D) versieht.

Die verschiedenen Begriffe sind vorstehend erläutert.

In einer Ausführungsform der vorliegenden Erfindung können vorzugsweise wässrige Druckformulierungen aus Schritt (a) ein Bindemittel enthalten, bevorzugt mindestens eine wässrige Dispersion von mindestens einem Film bildenden Polymer, beispielsweise Polyacrylat, Polybutadien, Copolymere von mindestens einem Vinylaromaten mit mindestens einem konjugierten Dien und gegebenenfalls weiteren Comonomeren, beispielsweise Styrol-Butadien-Bindemittel. Weitere geeignete Bindemittel sind gewählt aus Polyurethan, vorzugsweise anionischem Polyurethan, oder Ethylen-(Meth)acrylsäure-Copolymer. Bindemittel können im Rahmen der vorliegenden Erfindung auch als Binder bezeichnet werden.

Als Binder geeignete Polyacrylate im Sinne der vorliegenden Erfindung sind beispielsweise erhältlich durch Copolymerisation von mindestens einem (Meth)acrylsäure-C₁-C₁₀-Alkylester, beispielsweise Acrylsäuremethylester, Acrylsäureethylester, Acrylsäuren-Butylester, Methacrylsäure-n-butylester, Acrylsäure-2-ethylhexylester, mit mindestens einem weiteren Comonomer, beispielsweise einem weiteren (Meth)acrylsäure-C₁-C₁₀-Alkylester, (Meth)acrylsäure, (Meth)acrylamid, N-Methylol(meth)acrylamid, Glycidyl(meth)acrylat oder einer vinylaromatischen Verbindung wie beispielsweise Styrol.

Als Binder geeignete vorzugsweise anionische Polyurethane im Sinne der vorliegenden Erfindung sind beispielsweise erhältlich durch Umsetzung von einem oder mehreren aromatischen oder vorzugsweise aliphatischen oder cycloaliphatischen Diisocyanat mit einem oder mehreren Polyesterdiolen und vorzugsweise einer oder mehreren Hydroxycarbonsäuren, z. B Hydroxyessigsäure, oder vorzugsweise Dihydroxycarbonsäuren, beispielsweise 1,1-Dimethylolpropionsäure, 1,1-Dimethylolbuttersäure oder 1,1-Dimethylolethansäure.

Als Bindemittel besonders geeignete Ethylen-(Meth)acrylsäure-Copolymere sind beispielsweise durch Copolymerisation von Ethylen, (Meth)acrylsäure und gegebenenfalls mindestens einem weiteren Comonomer wie beispielsweise (Meth)acrylsäure-C₁-C₁₀-Alkylester, Maleinsäureanhydrid, Isobuten oder Vinylacetat erhältlich, vorzugsweise durch Copolymerisation bei Temperaturen im Bereich von 190 bis 350°C und Drücken im Bereich von 1500 bis 3500, bevorzugt 2000 bis 2500 bar.

Als Bindemittel besonders geeignete Ethylen-(Meth)acrylsäure-Copolymere können beispielsweise bis zu 90 Gew.-% Ethylen einpolymerisiert enthalten und eine Schmelzeviskosität v (griechischer Buchstabe ny) im Bereich von 60 mm²/s bis 10.000 mm²/s auf, bevorzugt 100 mm²/s bis 5.000 mm²/s aufweisen, gemessen bei 120°C.

Als Bindemittel besonders geeignete Ethylen-(Meth)acrylsäure-Copolymere können beispielsweise bis zu 90 Gew.-% Ethylen einpolymerisiert enthalten und eine Schmelzemassefließrate (MFR) im Bereich von 1 bis 50 g/10 min, bevorzugt 5 bis 20 g/10 min, besonders bevorzugt 7 bis 15 g/10 min aufweisen, gemessen bei 160°C und einer Belastung von 325 g nach EN ISO 1133.

Als Bindemittel besonders geeignete Copolymere von mindestens einem Vinylaromaten mit mindestens einem konjugierten Dien und gegebenenfalls weiteren Comonomeren, beispielsweise Styrol-Butadien-Bindemittel, enthalten mindestens eine ethylenisch ungesättigte Carbonsäure oder Dicarbonsäure oder ein geeignetes Derivat, beispielsweise das entsprechende Anhydrid, einpolymerisiert. Besonders geeignete Vinylaromaten sind para-Methylstyrol, α-Methylstyrol und insbesondere Styrol. Besonders geeignete konjugierte Diene sind Isopren, Chloropren und insbesondere 1,3-Butadien. Als besonders geeignete ethylenisch ungesättigte Carbonsäuren oder Dicarbonsäuren oder geeignete Derivate davon seien (Meth)acrylsäure, Maleinsäure, Itaconsäure, Maleinsäureanhydrid bzw. Itaconsäureanhydrid beispielhaft genannt.

In einer Ausführungsform der vorliegenden Erfindung enthalten als Bindemittel besonders geeignete Copolymere von mindestens einem Vinylaromaten mit mindestens einem konjugierten Dien und gegebenenfalls weiteren Comonomeren einpolymerisiert:
19,9 bis 80 Gew.-% Vinylaromat,
19,9 bis 80 Gew.-% konjugiertes Dien,
0,1 bis 10 Gew.-% ethylenisch ungesättigte Carbonsäure oder Dicarbonsäure oder ein geeignetes Derivat, beispielsweise das entsprechende Anhydrid.

In einer Ausführungsform der vorliegenden Erfindung hat Bindemittel bei 23°C eine dynamische Viskosität η im Bereich von 10 bis 100 dPa·s, bevorzugt 20 bis 30 dPa·s, bestimmt beispielsweise durch Rotationsviskosimetrie, beispielsweise mit einem Haake-Viskosimeter.

In Schritt (a) eingesetzte vorzugsweise wässrige Formulierungen können einen oder mehrere Emulgatoren enthalten.

Als Emulgator kann man anionische, kationische oder vorzugsweise nicht-ionische oberflächenaktive Substanzen verwenden.

Beispiele für geeignete kationische Emulgatoren sind beispielsweise einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid.

Beispiele für geeignete anionische Emulgatoren sind Alkalimetall- und Ammoniumsalze von Alkylsulfaten (Alkylrest: C₈ bis C₁₂), von Schwefelsäurehalbestern ethoxylierter Alkanole (Ethoxylierungsgrad: 4 bis 30, Alkylrest: C₁₂-C₁₈) und ethoxylierter Alkylphenole (Ethoxylierungsgrad: 3 bis 50, Alkylrest: C₄-C₁₂), von Alkylsulfonsäuren (Alkylrest: C₁₂-C₁₈), von Alkylarylsulfonsäuren (Alkylrest: C₉-C₁₈) und von Sulfosuccinaten wie beispielsweise Sulfobernsteinsäuremono- oder diestern. Bevorzugt sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37.

Besonders bevorzugt sind nichtionische Emulgatoren wie beispielsweise ein- oder vorzugsweise mehrfach alkoxylierte C₁₀-C₃₀-Alkanole, bevorzugt mit drei bis hundert Mol C₂-C₄-Alkylenoxid, insbesondere Ethylenoxid alkoxylierte Oxo- oder Fettalkohole.

Beispiele für besonders geeignete mehrfach alkoxylierte Fettalkohole und Oxoalkohole sind
n-C₁₈H₃₇O-(CH₂CH₂O)₈₀-H, n-C₁₈H₃₇O-(CH₂CH₂O)₇₀-H, n-C₁₈H₃₇O-(CH₂CH₂O)₆₀-H, n-C₁₈H₃₇O-(CH₂CH₂O)₅₀-H, n-C₁₈H₃₇O-(CH₂CH₂O)₂₅-H, n-C₁₈H₃₇O-(CH₂CH₂O)₁₂-H, n-C₁₆H₃₃O-(CH₂CH₂O)₈₀-H, n-C₁₆H₃₃O-(CH₂CH₂O)₇₀-H, n-C₁₆H₃₃O-(CH₂CH₂O)₆₀-H, n-C₁₆H₃₃O-(CH₂CH₂O)₅₀-H, n-C₁₆H₃₃O-(CH₂CH₂O)₂₅-H, n-C₁₆H₃₃O-(CH₂CH₂O)-₁₂-H, n-C₁₂H₂₅O-(CH₂CH₂O)₁₁-H, n-C₁₂H₂₅O-(CH₂CH₂O)₁₈-H, n-C₁₂H₂₅O-(CH₂CH₂O)₂₅-H, n-C₁₂H₂₅O-(CH₂CH₂O)₅₀-H, n-C₁₂H₂₅O-(CH₂CH₂O)₈₀-H, n-C₃₀H₆₁O-(CH₂CH₂O)₈-H, n-C₁₀H₂₁O-(CH₂CH₂O)₉-H, n-C₁₀H₂₁O-(CH₂CH₂O)₇-H, n-C₁₀H₂₁O-(CH₂CH₂O)₅-H, n-C₁₀H₂₁O-(CH₂CH₂O)₃-H,
und Mischungen der vorstehend genannten Emulgatoren, beispielsweise Mischungen von n-C₁₈H₃₇O-(CH₂CH₂O)₅₀-H und n-C₁₆H₃₃O-(CH₂CH₂O)₅₀-H,
wobei die Indices jeweils als Mittelwerte (Zahlenmittel) aufzufassen sind.

In einer Ausführungsform der vorliegenden Erfindung können in Schritt (a) eingesetzte Druckformulierungen mindestens einen Rheologiemodifizierer enthalten, ausgewählt aus Verdickungsmitteln, die auch als Verdicker bezeichnet werden können, und die Viskosität senkenden Mitteln.

Geeignete Verdickungsmittel sind beispielsweise natürliche Verdickungsmittel oder vorzugsweise synthetische Verdickungsmittel. Natürliche Verdickungsmittel sind solche Verdickungsmittel, die Naturprodukte sind oder durch Aufarbeitung wie beispielsweise Reinigungsoperationen, insbesondere Extraktion von Naturprodukten erhalten werden können. Beispiele für anorganische natürliche Verdickungsmittel sind Schichtsilikate wie beispielsweise Bentonit. Beispiele für organische natürliche Verdickungsmittel sind vorzugsweise Proteine wie beispielsweise Casein oder bevorzugt Polysaccharide, Besonders bevorzugte natürliche Verdickungsmittel sind gewählt aus Agar-Agar, Carrageen, Gummi arabicum, Alginaten wie beispielsweise Natriumalginat, Kaliumalginat, Ammoniumalginat, Calciumalginat und Propylengycolalginat, Pektinen, Polyosen, Johannisbrotbaum-Kernmehl (Carubin) und Dextrinen.

Bevorzugt ist der Einsatz von synthetischen Verdickungsmitteln, die gewählt sind aus im Allgemeinen flüssigen Lösungen von synthetischen Polymeren, insbesondere Acryläten, in beispielsweise Weißöl oder als wässrige Lösungen, und aus synthetischen Polymeren in getrockneter Form, beispielsweise als durch Sprühtrocknung hergestelltem Pulver. Als Verdickungsmittel eingesetzte synthetische Polymere enthalten Säuregruppen, die vollständig oder zu einem gewissen Prozentsatz mit Ammoniak neutralisiert werden. Beim Fixierprozess wird Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen.

Ganz besonders bevorzugte synthetische Verdickungsmittel sind gewählt aus Copolymeren von 85 bis 95 Gew.-% Acrylsäure, 4 bis 14 Gew.-% Acrylamid und 0,01 bis maximal 1 Gew.-% des (Meth)acrylamidderivats der Formel I 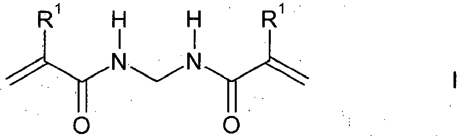 mit Molekulargewichten M_{w} im Bereich von 100.000 bis 2.000.000 g/mol, in denen die Reste R¹ gleich oder verschieden sein können und Methyl oder Wasserstoff bedeuten können.

Weitere geeignete Verdickungsmittel sind gewählt aus Reaktionsprodukten von aliphatischen Diisocyanaten wie beispielsweise Trimethylendiisocyanat, Tetramethylendiisocyanat, Hexamethylendiisocyanat oder Dodecan-1,12-diisocyanat mit vorzugsweise 2 Äquivalenten mehrfach alkoxyliertem Fettalkohol oder Oxoalkohol, beispielsweise 10 bis 150-fach ethoxyliertem C₁₀-C₃₀-Fettalkohol oder C₁₁-C₃₁-Oxoalkohol.

Geeignete die Viskosität senkende Mittel sind beispielsweise organische Lösungsmittel wie Dimethylsulfoxid (DMSO), N-Methylpyrrolidon (NMP), N-Ethylpyrrolidon (NEP), Ethylenglykol, Diethylenglykol, Butylglykol, Dibutylglykol, und beispielsweise Restalkohol-freier alkoxylierter n-C₄-C₈-Alkanol, bevorzugt Restalkohol-freier ein- bis 10-fach, besonders bevorzugt 3- bis 6-fach ethoxylierter n-C₄-C₈-Alkanol. Dabei ist unter Restalkohol das jeweils nicht alkoxylierte n-C₄-C₈-Alkanol zu verstehen.

In einer Ausführungsform der vorliegenden Erfindung enthält in Schritt (a) eingesetzte Druckformulierung
im Bereich von 10 bis 90 Gew.-%, bevorzugt 50 bis 85 Gew.-%, besonders bevorzugt 60 bis 80 Gew.-% Metallpulver (a),
im Bereich von 1 bis 20 Gew.-%, bevorzugt 2 bis 15 Gew.-% Bindemittel,
im Bereich von 0,1 bis 4 Gew.-%, bevorzugt bis 2 Gew.-% Emulgator,
im Bereich von 0 bis 5 Gew.-%, bevorzugt 0,2 bis 1 Gew.-% Rheologiemodifizierer, wobei Angaben in Gew.-% jeweils auf die gesamte in Schritt (a) eingesetzte Druckformulierung bezogen sind und sich bei Bindemitteln auf den Feststoffgehalt des jeweiligen Bindemittels beziehen.

In einer Ausführungsform der vorliegenden Erfindung kann man in Schritt (a) des erfindungsgemäßen Verfahrens mit einer Druckformulierung bedrucken, die zusätzlich zu Metallpulver (a) und gegebenenfalls Bindemittel, gegebenenfalls Emulgator und gegebenenfalls Rheologiemodifizierer mindestens ein Hilfsmittel enthält. Als Hilfsmittel seien Griffverbesserer, Entschäumer, Netzmittel, Egalisiermittel, Harnstoff, Wirkstoffe wie beispielsweise Biozide oder Flammfestmittel, beispielhaft genannt:
Geeignete Entschäumer sind beispielsweise silikonhaltige Entschäumer wie beispielsweise solche der Formel HO-(CH₂)₃-Si(CH₃)[OSi(CH₃)₃]₂ und
HO-(CH₂)₃-Si(CH₃)[OSi(CH₃)₃][OSi(CH₃)₂OSi(CH₃)₃], nicht alkoxyliert oder mit bis zu 20 Äquivalenten Alkylenoxid und insbesondere Ethylenoxid alkoxyliert. Auch Silikon-freie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearihsäure-C₁₀-C₂₀-alkylester, bei denen C₈-C₂₀-Alkyl, bevorzugt C₁₀-C₂₀-Alkyl unverzweigt oder verzweigt sein kann.

Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Geeignete Egalisiermittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol. Ganz besonders bevorzugt sind Blockcopolymerisate aus Propylenoxid/Ethylenoxid beispielsweise der Formel EO₈PO₇EO₈, wobei EO für Ethylenoxid und PO für Propylenoxid steht.

Geeignete Biozide sind beispielsweise als Proxel-Marken im Handel befindlich. Beispielhaft seien genannt: 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT").

In einer Ausführungsform der vorliegenden Erfindung enthält in Schritt (a) eingesetzte Druckformulierung bis zu 30 Gew.-% Hilfsmittel (e), bezogen auf die Summe aus Metallpulver, Bindemittel, Emulgator und gegebenenfalls Rheologiemodifizierer.

In einer Ausführungsform der vorliegenden Erfindung kann man einen oder mehrere thermische Behandlungsschritte (d) im Anschluss an Schritt (a), an Schritt (b) oder an den optionalen Schritt (c) durchführen. Dabei werden im Rahmen der vorliegenden Erfindung unmittelbar nach Schritt (a) durchgeführte thermische Behandlungsschritte auch als thermische Behandlungsschritte (d1) bezeichnet, unmittelbar nach Schritt (c) durchgeführte thermische Behandlungsschritte auch als thermische Behandlungsschritte (d2) und nach Schritt (b) durchgeführte thermische Behandlungsschritte auch als thermische Behandlungsschritte (d3).

Wünscht man mehrere thermische Behandlungsschritte durchzuführen, so kann man die verschiedenen thermischen Behandlungsschritte bei der gleichen oder vorzugsweise bei verschiedenen Temperaturen durchführen.

In Schritt (d) bzw. jedem einzelnen Schritt (d) kann man beispielsweise bei Temperaturen im Bereich von 50 bis 200°C behandeln. Dabei ist darauf zu achten, dass durch die thermische Behandlung nach Schritt (d) das Material, aus dem die als Ausgangsmaterial eingesetzte Abdeckschicht (D) besteht, nicht erweichen oder gar schmelzen darf. Man bleibt also mit der Temperatur unter dem Erweichungs- oder Schmelzpunkt der betreffenden Abdeckschicht (D), oder man wählt die Dauer der thermischen Behandlung so kurz, dass ein Erweichen oder gar Schmelzen noch nicht stattfindet.

In Schritt (d) bzw. jedem einzelnen Schritt (d) kann man beispielsweise über einen Zeitraum von 10 Sekunden bis 15 Minuten, bevorzugt 30 Sekunden bis 10 Minuten behandeln.

Besonders bevorzugt behandelt man in einem ersten Schritt (d1) bei Temperaturen im Bereich von beispielsweise 50 bis 110°C über einen Zeitraum von 30 Sekunden bis 3 Minuten und in einem zweiten Schritt (d2) anschließend bei Temperaturen im Bereich von 130°C bis 200°C über einen Zeitraum von 30 Sekunden bis 15 Minuten.

Man kann Schritt (d) bzw. jeden einzelnen Schritt (d) in an sich bekannten Geräten durchführen, zum Beispiel in Trockenschränken, Spannrahmen oder Vakuumtrockenschränken.

In einer bevorzugten Ausführungsform der vorliegenden Erfindung führt man vor Schritt (c) einen weiteren Schritt (e) durch. Zur Durchführung von Schritt (e) scheidet man an einigen Stellen auf der nach Schritt (a) mit Metallpulver (a) versehenen textilen Oberfläche eine Mischung ab, die ebenfalls ein Metall in vorzugsweise Pulverform enthält, das verschieden von Metallpulver (a) sein kann oder vorzugsweise gleich ist.

In einer Ausführungsform des erfindungsgemäßen Verfahrens scheidet man in Schritt (e) an mindestens zwei bedruckten Stellen eine Mischung ab, die ebenfalls Metallpulver (a) enthält. Dabei kann es sich bei der Mischung, die ebenfalls Metallpulver (a) enthält, um weitere Druckformulierung und insbesondere Druckpaste handeln, wie sie auch in Schritt (a) eingesetzt wurde, oder aber um eine Mischung, die weitere Bestandteile enthält. In einer dritten Ausführungsform von Schritt (e) handelt es sich bei der Mischung, die ebenfalls Metallpulver (a) enthält, um eine Zubereitung, die Lötzinn enthält.

In einer Ausführungsform der vorliegenden Erfindung scheidet man in Schritt (e) so viel Mischung ab, die Metall enthält, dass die Schichtdicke von Metall im Bereich von 2 bis 200 mal so dick ist wie die Schichtdicke von Metallpulver (a).

In einer Ausführungsform der vorliegenden Erfindung scheidet man in Schritt (e) so viel Mischung ab, die Metallpulver (a) enthält, dass die Schichtdicke von Metallpulver (a) auf Dekorschicht (A) bzw. Teil von Dekorschicht (A) im Bereich von 0,1 bis 5 mm beträgt.

In einer Ausführungsform der vorliegenden Erfindung unterscheidet sich Metallpulver (a) aus Schritt (a) von Metallpulver (a) aus Schritt (e), vorzugsweise durch den mittleren Partikeldurchmesser.

In einer bevorzugten Ausführungsform der vorliegenden Erfindung sind Metallpulver (a) aus Schritt (a) und Schritt (e) jeweils gleich.

In einer Ausführungsform der vorliegenden Erfindung führt man ein so genanntes "dot printing" durch.

Nach der Durchführung von Schritt (e) kann man Schritt (d) wiederholen. Es ist jedoch bevorzugt, unmittelbar nach der Durchführung von Schritt (e) auf eine thermische Behandlung (d) zu verzichten und sofort Schritt (c) durchzuführen.

Ein weiterer Gegenstand der vorliegenden Erfindung ist die Verwendung von erfindungsgemäßen mehrschichtigen Körpern zur Innenausstattung von Gebäuden oder Fahrzeugen. Bei Fahrzeugen sind Flugzeuge, Wasserfährzeuge wie insbesondere Schiffe, weiterhin Eisenbahnen und insbesondere Automobile zu verstehen. Als Innenausstattung von Gebäuden sind insbesondere Fußböden, Wände und Decken von Gebäuden zu verstehen.

Ein weiterer Gegenstand der vorliegenden Erfindung sind Gebäude und Fahrzeuge, umfassend mindestens einen erfindungsgemäßen mehrschichtigen Körper.

Die Erfindung wird durch Arbeitsbeispiele erläutert.

Arbeitsbeispiele:
Angaben in % sind stets Gew.-%, wenn nicht ausdrücklich anders angegeben.

### I. Herstellung eines Cellulosefaser-haltigen Substrats (B.1)

### 1.1 Herstellung von flüssigen Farbmittelzubereitungen

### I.1.1 Herstellung einer roten flüssigen Farbmittelzubereitung

In einer Rührwerkskugelmühle wurden
26 Gew.-% C.I. Pigment Red 48:2
5 Gew.-% C.I. Direct Red 80
24 Gew.-% einer 26 % wässrigen Lösung eines Acrylsäure/Styrol-Copolymers, vollständig mit Ammoniak neutralisiert, Säurezahl: 216 mg KOH/g, mittleres Molekulargewicht Mₙ von 9.200 g/mol
5 Gew.-% Dipropylenglykol
40 Gew.-% Wasser
miteinander vermahlen. Man erhielt eine rote flüssige Farbmittelzubereitung.

### 1.1.2 Herstellung einer grünen flüssigen Farbmittelzubereitung

Es wurde eine Mischung aus 25 Gew.-% einer grünen Pigmentzubereitung, die durch Nassmahlung in einer Rührwerkskugelmühle aus
40 Gew.-% C.I. Pigment Green 7
8 Gew.-% eines Blockcopolymers auf Basis Ethylendimin/Propylenoxid/Ethylenoxid mit einem Ethylenoxidgehalt von 40 % und einem mittleren Molekulargewicht Mₙ von 6.500 g/mol
15 Gew.-% Dipropylenglykol
37 Gew.-% Wasser
hergestellt und mit 7 Gew.-% einer 47 Gew.-% Lösung von C.I. Basic Green 7 in 48 Gew.-% Essigsäure und 68 Gew.-% Wasser hergestellt.

### 1.1.3 Leitfähige flüssige schwarze Farbmittelzubereitung

Es wurde eine Mischung aus 98 Gew.-% einer schwarzen Pigmentzubereitung, die durch Nassmahlung in einer Rührwerkskugelmühle aus
20 Gew.-% leitfähigem Ruß
10 Gew.-% eines Blockcopolymers auf Basis Ethylendiamin/Propylenoxid/Ethylen oxid mit einem Ethylenoxidgehalt von 40 Gew.-% und einem mittleren Molekulargewicht Mₙ von 12.000 g/mol
70 Gew.-% Wasser
hergestellt wurde,
und weiterhin 2 Gew.-% einer 10 % Lösung von C.I. Basic Violet 3 in 30 % Essigsäure hergestellt.

### I.2 Herstellung von Leimansätzen

Für die Herstellung von MDF-Platten wurden, soweit nicht anders angegeben, ein in Tabelle 1 aufgeführter Leimansatz verwendet:

**Tabelle 1:**

| Leimansatz 1 | |
|---|---|
| Harnstoff-Melamin-Formaldehyd-Harz, 66,5% in Wasser | 100,0 Gew.-Teile |
| Paraffin-Dispersion, 60% in Wasser | 4,0 Gew.-Teile |
| Farbmittelzubereitung aus I.1.1 | 4,7 Gew.-Teile |
| Wasser | 49,6 Gew.-Teile |
| | |
| Festharzgehalt des Leimansatzes | 42% |
| Festharz/atro Fasern | 14% |
| Leimansatz 1 auf 100 kg atro Fasern | 33,3 kg |

| Leimansatz 2 | |
|---|---|
| Harnstöff-Melamin-Formaldehyd-Harz, 66,5% in Wasser | 100,0 Gew.-Teile |
| Paraffin-Dispersion, 60% in Wasser | 4,0 Gew.-Teile |
| Farbmittelzubereitung aus I.1.2 | 2,4 Gew.-Teile |
| Wasser | 52,0 Gew.-Teile |
| | |
| Festharzgehalt des Leimansatzes | 42% |
| Festharz/atro Fasern | 14% |
| Leimansatz 2 auf 100 kg atro Fasern | 33,3 kg |

### I.3 Herstellung von Substraten (B.1) bis (B.2)

### I.3.1 Herstellung von rotem Substrat (B.1)

Man gab 33,3 kg des Leimansatzes 1 zu 100 kg (atro) gebleichten, gemahlenen und getrockneten Holzfasern auf Basis von Fichtenholz, mischte in einem Trommelmischer und erhielt beleimte rote Holzfasern. Diese beleimten roten Holzfasern wurden anschließend in einem Trockner auf eine Feuchte von ca. 8 Gew.-% getrocknet, zu einer Matte geschüttet, vorverdichtet und bei 220°C zu einer MDF-Platte gepresst. Der Feuchtegehalt der so erhaltenen MDF-Platte betrug 2 Gew.-%.

Die so erhaltene MDF-Platte (B.1) zeigt eine homogene, brillante, lichtechte Rotfärbung.

### I.3.2 Herstellung einer grün gefärbten MDF-Platte

Man gab 33,3 kg des Leimansatzes 2 zu 100 kg (atro) gebleichten, gemahlenen und getrockneten Holzfasern auf Basis von Fichtenholz, mischte in einem Trommelmischer und erhielt beleimte grüne Holzfasern. Diese beleimten grünen Holzfasern wurden anschließend in einem Trockner auf eine Feuchte von ca. 8 Gew.-% getrocknet, zu einer Matte geschüttet, vorverdichtet und bei 220°C zu einer MDF-Platte gepresst. Der Feuchtegehalt der so erhaltenen MDF-Platte betrug 2 Gew.-%.

Die erhaltene MDF-Platte (B.2) zeigt eine homogene, brillante, lichtechte Grünfärbung.

### II. Herstellung eines mit einer Metallschicht (C.1) Teils einer bedruckten Dekorschicht (A.1)

### II.1 Herstellung einer Druckpaste

Man verrührte miteinander:
54 g Wasser
750 g Carbonyleisenpulver, d₁₀ 3 µm, d₅₀ 4,5 µm, d₉₀ 9 µm, passiviert mit einer mikroskopisch dünnen Eisenoxidschicht.
125 g einer wässrigen Dispersion, pH-Wert 6,6, Feststoffgehalt 39,3 Gew.-%, eines statistischen Emulsionscopolymerisats von
1 Gew.-Teil N-Methylolacrylamid, 1 Gew.-Teil Acrylsäure, 28,3 Gew.-Teilen Styrol, 69,7 Gew.-Teilen n-Butylacrylat (Angaben in Gew.-Teilen sind jeweils bezogen auf gesamten Feststoff), mittlerer Pärtikeldurchmesser (Gewichtsmittel) 172 nm, bestimmt durch Coulter Counter, T_{g}: - 19°C (Bindemittel 1), dynamische Viskosität (23°C) 70 mPa·s,
20 g Verbindung der Formel 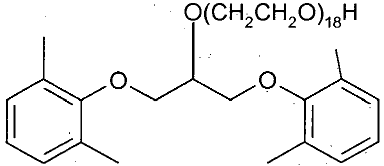
20 g einer 51 Gew.-% Lösung eines Umsetzungsprodukts von Hexamethylendiisocyanat mit n-C₁₈H₃₇(OCH₂CH₂)₁₅OH in Isopropanol/Wasser (Volumenanteile 2:3)
Man rührte über einen Zeitraum von 20 Minuten mit 5000 U/min (Ultra-Thurrax). Man erhielt eine Druckpaste mit einer dynamischen Viskosität von 30 dPa·s bei 23°C, gemessen mit einem Rotationsviskosimeter nach Haake.

### II.2 Bedrucken von Teil von Dekorschicht (A.1), Versehen mit einer Mischung, die Metallpulver (a1) enthält

Man bedruckte mit Druckpaste aus I.4 ein Polyestervlies, Flächengewicht 90 g/m² - mit einem Sieb, mesh 80 mit einem Streifenmuster.

Anschließend trocknete man in einem Trockenschrank über einen Zeitraum von 10 Minuten bei 100°C. Man erhielt bedrucktes und thermisch behandeltes Polyestervlies.

### II.3 Versehen mit einer Mischung, die Metallpulver (a1) enthält, Schritt (c.1), und Fixieren von Artikeln, die elektrischen Strom benötigen, Schritt (c)

Man verdruckte erneut Druckpaste aus I., und zwar in Form von kleinen Kreisen mit einem Durchmesser von 2 mm auf das vorstehend gedruckte Muster.

Anschließend verteilte man per Hand licht-emittierende Dioden des Typs "Everlight model 67-22SURSYGC S530-A2/TR8 device number: DSE-672-025 der Fa. Everlight Electronics Co., Ltd. in rot und grün (SUR Typ AlGalnP für rote Licht-emittierende Dioden, SYR Typ AlGalnP für gelbe Licht-emittierende Dioden), Format: 3,2 mm 2,7 mm.

Man erhielt bedrucktes und thermisch behandeltes Polyestervlies.

### III. Abscheiden von Kupfer ohne externe Spannungsquelle

Bedrucktes und thermisch behandeltes Polyestervlies aus II. wurde über einen Zeitraum von 10 Minuten in einem Bad (Zimmertemperatur) behandelt, das wie folgt zusammengesetzt war:
1,47 kg CuSO₄·5H₂O
382 g H₂SO₄
5,1 I destilliertes Wasser
1,1 g NaCl
5 g C₁₃/C₁₅-Alkyl-O-(EO)₁₀(PO)₅-CH₃
(EO: CH₂-CH₂-O PO: CH₂-CH(CH₃)-O)

Man entnahm das Polyestervlies, spülte zweimal unter fließendem Wasser und trocknete bei 90°C über einen Zeitraum von einer Stunde.

Man erhielt mit einer Metallschicht (C.1) bedruckten Teil einer Dekorschicht (A.1).

### IV. Herstellung eines erfindungsgemäßen mehrschichtigen Körpers

### IV.1 Herstellung von MSK.1

Man tränkte den mit einer Metallschicht (C.1) bedruckten Teil einer Dekorschicht (A.1) aus III. mit einer wässrigen Imprägnierflotte, bestehend aus
1000 g einer 60 Gew.-% Harnstoff-Melamin-Formaldehyd-Harz-Lösung
3,5 g einer 60 Gew.-% wässrigen Lösung von Morpholinium-para-Toluolsulfonat
71 g Wasser,
mit Hilfe einer Drahtrakel:
Anschließend trocknete man über einen Zeitraum von 3 Minuten bei 120°C auf eine Restfeuchte von 3%. Das Flächengewicht betrug nun 170 g/cm².

Danach legte man mit einer Metallschicht (C.1) bedruckten und mit Harnstoff-Melamin-Formaldehyd-Harz imprägnierten Teil einer Dekorschicht (A.1) auf Substrat mit der bedruckten Seite nach unten auf (B.1) und verpresste man bei einer Temperatur von 180°C und einem Druck von 25 bar über einen Zeitraum von 40 Sekunden.

Man erhielt einen erfindungsgemäßen mehrschichtigen Körper MSK.1, der durch Fräsen mit einer Nut versehen wurde.

### IV.1 Herstellung von MSK.2

Man tränkte den mit einer Metallschicht (C.1) bedruckten Teil einer Dekorschicht (A.1) aus III. mit einer wässrigen Imprägnierflotte, bestehend aus
1000 g einer 60 Gew.-% Harnstoff-Melamin-Formaldehyd-Harz-Lösung
3,5 g einer 60 Gew.-% wässrigen Lösung von Morpholinium-para-Toluolsulfonat
71 g Wasser
mit Hilfe einer Drahtrakel.
Anschließend trocknete man über einen Zeitraum von 3 Minuten bei 120°C auf eine Restfeuchte von 3%. Das Flächengewicht betrug nun 170 g/cm².

Danach legte man mit einer Metallschicht (C.1) bedruckten und mit Harnstoff-Melamin-Formaldehyd-Harz imprägnierten Teil einer Dekorschicht (A.1) auf Substrat mit der bedruckten Seite nach unten auf (B.2) und verpresste man bei einer Temperatur von 180°C und einem Druck von 25 bar über einen Zeitraum von 10 Sekunden.

Man erhielt einen erfindungsgemäßen mehrschichtigen Körper MSK.2, der durch Fräsen mit einer Nut versehen wurde.

MSK.1 bzw. MSK.2 haben jeweils keinen Gegenzug.

### IV.3 Anwendungstechnische Verwendung von MSK.1 und MSK.2

Man wiederholte die Herstellung von MSK.1 bzw. MSK.2 mehrfach.
Aus 20 Stücken MSK.1 stellte man einen Fußboden her.
Aus 20 Stücken MSK.2 stellte man einen Fußboden her.

## Patentansprüche

1. Mehrschichtiger Körper, umfassend
(A) mindestens eine Dekorschicht,
(B) mindestens ein Substrat, das Cellulosefasern enthält,
(C) mindestens eine metallhaltige Schicht, hergestellt durch ein Verfahren, das die folgenden Schritte umfasst
(a) Bedrucken von Dekorschicht (A) oder eines Teils von Dekorschicht (A) mit einer Druckformulierung, die mindestens ein Metallpulver enthält, indem man Dekorschicht (A) oder einen Teil von Dekorschicht (A) an einigen Stellen mit Druckformulierung bedruckt, die Metallpulver (a) enthält, und an anderen Stellen nicht,
(b) Abscheiden mindestens eines weiteren Metalls.
(D) gegebenenfalls mindestens eine Abdeckschicht.

2. Mehrschichtiger Körper nach Anspruch 1, **dadurch gekennzeichnet, dass** man zur Herstellung von Schicht (C) weiterhin als Schritt
(c) Versehen mit mindestens einem Artikel, der elektrischen Strom erzeugt oder verbraucht
durchführt.

3. Mehrschichtiger Körper nach Anspruch 1 oder 2, **dadurch gekennzeichnet, dass** man zur Herstellung von Schicht (C) weiterhin als Schritt
(d) mindestens eine thermische Behandlung
durchführt.

4. Mehrschichtiger Körper nach einem der Ansprüche 1 bis 3, **dadurch gekennzeichnet, dass** Substrat (B) gewählt wird aus MDF und HDF.

5. Mehrschichtiger Körper nach einem der Ansprüche 1 bis 4, **dadurch gekennzeichnet, dass** Substrat (B) gewählt wird aus durchgefärbten MDF oder HDF.

6. Mehrschichtiger Körper nach einem der Ansprüche 1 bis 5, **dadurch gekennzeichnet, dass** es sich bei Abdeckschicht (D) um Textil, Kunststofffolie oder Papier handelt.

7. Mehrschichtiger Verbundkörper nach einem der Ansprüche 1 bis 6, **dadurch gekennzeichnet, dass** es sich bei Dekorschicht (A) um Dekorpapier oder einen Schichtstoff handelt

8. Mehrschichtiger Körper nach einem der Ansprüche 1 bis 7, **dadurch gekennzeichnet, dass** man Artikel, die elektrischen Strom benötigen oder erzeugen, wählt aus Licht emittierenden Dioden, flüssigkristallinen Anzeigeelementen, Peltierelementen, Transistoren, elektrochromen Farbstoffen, elektromechanischen Elementen und Solarzellen.

9. Verfahren zur Herstellung von mehrschichtigen Körpern, **dadurch gekennzeichnet, dass** man
(A) eine Dekorschicht oder einen Teil einer Dekorschicht (A)
(a) mit einer Druckformulierung bedruckt, die mindestens ein Metallpulver enthält, indem man Dekorschicht (A) oder einen Teil von Dekorschicht (A) an einigen Stellen mit Druckformulierung bedruckt, die Metallpulver enthält, und an anderen Stellen nicht,
(c) gegebenenfalls mit mindestens einem Artikel versieht, der elektrischen Strom erzeugt oder verbraucht,
(b) ein weiteres Metall abscheidet,
(d) gegebenenfalls thermisch behandelt,
dass man auf die derart mit einer metallhaltigen Schicht (C) versehene Dekor schicht (A) mindestens ein Substrat (B), welches Cellulosefasern enthält, auf bringt.
das mit einer Abdeckschicht (D) versehen sein kann oder das man mit einer Abdeckschicht (D) versehen kann.

10. Verfahren nach Anspruch 9, **dadurch gekennzeichnet, dass** man in Schritt (b) ohne externe Spannungsquelle arbeitet und dass das weitere Metall in Schritt (b) in der elektrochemischen Spannungsreihe der Elemente ein stärker positives Normalpotenzial aufweist als Metallpulver, das in Schritt (a) aufgedruckt wird.

11. Verfahren nach Anspruch 9, **dadurch gekennzeichnet, dass** man in Schritt (b) mit externer Spannungsquelle arbeitet und dass das weitere Metall in Schritt (b) in der elektrochemischen Spannungsreihe der Elemente ein stärker oder schwächer positives Normalpotenzial aufweist als Metallpulver (a) das in Schritt (a) aufgedruckt wird.

12. Verfahren nach einem der Ansprüche 9 bis 11, **dadurch gekennzeichnet, dass** es sich bei Metallpulver in Schritt (a) um solches handelt, dass man durch ther mische Zersetzung von Eisenpentacarbonyl gewonnen hat,

13. Verfahren nach einem der Ansprüche 9 bis 12, **dadurch gekennzeichnet, dass** man in Schritt (a) mit Hilfe von Druckformulierung Muster aufdruckt, bei denen Metallpulver in Form von geraden oder gebogenen Streifenmustern oder Linienmustern angeordnet ist.

14. Verfahren nach einem der Ansprüche 9 bis 13 zur Herstellung von Körpern nach einem der Ansprüche 1 bis 8.

15. Verwendung von Körpern nach einem der Ansprüche 1 bis 8 zur Innenausstattung von Gebäuden oder Fahrzeugen.

## Claims

1. Multilayered body, comprising
(A) at least a decorative layer,
(B) at least a substrate comprising cellulosic fibers,
(C) at least a metal-containing layer, obtained by a process comprising the following steps
(a) printing of decorative layer (A) or a part of decorative layer (A) with a printing formulation comprising at least a metal powder, by printing decorative layer (A) or a part of decorative layer (A) at some locations with the printing formulation comprising metal powder (a) and not at other locations,
(b) depositing at least a further metal,
(D) optionally, at least a covering layer.

2. Multilayered body according to claim 1, **characterized in that** for production of layer (C) furthermore step
(c) provision with at least an article generating or consuming electrical power
is performed.

3. Multilayered body according to claim 1 or 2, **characterized in that** for production of layer (C) furthermore step
(d) at least a thermal treatment
is performed.

4. Multilayered body according to any of claims 1 to 3, **characterized in that** substrate (B) is selected from MDF and HDF.

5. Multilayered body according to any of claims 1 to 4, **characterized in that** substrate (B) is selected from imbued MDF or HDF.

6. Multilayered body according to any of claims 1 to 5, **characterized in that** the covering layer (D) is a textile, plastic foil or paper.

7. Multilayered composite body according to any of claims 1 to 6, **characterized in that** decorative layer (A) is a decorative paper or a laminate.

8. Multilayered body according to any of claims 1 to 7, **characterized in that** articles consuming or generating electrical power are selected from light emitting diodes, liquid crystalline display elements, Peltier elements, transistors, electrochromic dyes, electromagnetic elements and solar cells.

9. Process for production of multilayered bodies, **characterized in that** (A) a decorative layer or a part of a decorative layer (A)
(a) is printed with a printing formulation comprising at least a metal powder by printing decorative layer (A) or a part of decorative layer (A) at some locations, with printing formulation comprising metal powder and not at other locations,
(c) is optionally provided with an article generating or consuming electrical power,
(b) a further metal is deposited,
(d) is optionally thermally treated,
that at least one substrate (B) comprising cellulosic fibers is applied onto a metal-containing layer (C) thus provided within decorative layer (A), which is optionally provided with a covering layer (D) or which can be provided with a covering layer (D).

10. Process according to claim 9, **characterized in that** in step (b) no external power source is used and that the further metal in step (b) has a stronger normal potential in the electrochemical series as the metal powder which is imprinted in step (a).

11. Process according to claim 9, **characterized in that** in step (b) an external power source is used and that the further metal in step (b) has a stronger or weaker normal potential in the electrochemical series as the metal powder which is imprinted in step (a).

12. Process according to any of claims 9 to 11, **characterized in that** the metal powder in step (a) is one which as can be obtained by thermal decomposition of iron pentacarbonyl.

13. Process according to any of claims 9 to 12, **characterized in that** in step (a) patterns are printed with the help of printing formulations, in which the metal powder is arranged in form of straight or curved striped patterns or line patterns.

14. Process according to any of claims 9 to 13 for the production of bodies according to any of claims 1 to 8.

15. Use of bodies according to any of claims 1 to 8 for interior decoration of buildings and vehicles.

## Revendications

1. Corps multicouche, comprenant
(A) au moins une couche décorative,
(B) au moins un substrat comprenant des fibres cellulosiques,
(C) au moins une couche contenant des métaux, obtenue par un procédé comprenant les étapes suivantes
(a) impression d'une couche décorative (A) ou d'une partie de la couche décorative (A) à l'aide d'une formulation d'impression comprenant au moins une poudre de métal, par impression de la couche décorative (A) ou d'une partie de la couche décorative (A) à certains endroits à l'aide de la formulation d'impression comprenant la poudre de métal (a) et pas à d'autres endroits,
(b) dépôt d'au moins un autre métal,
(D) facultativement, au moins une couche de protection.

2. Corps multicouche selon la revendication 1, **caractérisé en ce que** pour la production de la couche (C) l'étape additionnelle suivante
(c) apport d'au moins un article générant ou consommant de l'énergie électrique
est réalisée.

3. Corps multicouche selon la revendication 1 ou 2, **caractérisé en ce que** pour la production de la couche (C) l'étape additionnelle suivante
(d) au moins un traitement thermique
est réalisée.

4. Corps multicouche selon l'une quelconque des revendications 1 à 3, **caractérisé en ce que** le substrat (B) est choisi parmi le MDF et le HDF.

5. Corps multicouche selon l'une quelconque des revendications 1 à 4, **caractérisé en ce que** le substrat (B) est choisi parmi le MDF ou le HDF imprégné.

6. Corps multicouche selon l'une quelconque des revendications 1 à 5, **caractérisé en ce que** la couche de protection (D) est un textile, une feuille en plastique ou du papier.

7. Corps composite multicouche selon l'une quelconque des revendications 1 à 6, **caractérisé en ce que** la couche décorative (A) est un papier décoratif ou un stratifié.

8. Corps multicouche selon l'une quelconque des revendications 1 à 7, **caractérisé en ce que** les articles consommant ou générant de l'énergie électrique sont choisis parmi les diodes électroluminescentes, les éléments d'affichage à cristaux liquides, les éléments Peltier, les transistors, les colorants électrochromiques, les éléments électromagnétiques et les cellules solaires.

9. Procédé de production de corps multicouche, **caractérisé en ce que**
(A) une couche décorative ou une partie d'une couche décorative (A)
(a) est imprimée à l'aide d'une formulation d'impression comprenant au moins une poudre de métal par impression de la couche décorative (A) ou d'une partie de la couche décorative (A) à certains endroits, à l'aide d'une formulation d'impression comprenant une poudre de métal et pas à d'autres endroits,
(c) est facultativement dotée d'un article générant ou consommant de l'énergie électrique,
(b) un autre métal est déposé,
(d) est facultativement traitée thermiquement,
et **en ce qu'**au moins un substrat (B) comprenant des fibres cellulosiques est appliqué sur une couche contenant des métaux (C) ainsi fournie dans la couche décorative (A), lequel est facultativement doté d'une couche de protection (D) ou qui peut être doté d'une couche de protection (D).

10. Procédé selon la revendication 9, **caractérisé en ce que** dans l'étape (b) aucune source électrique externe n'est utilisée et **en ce que** le métal additionnel dans l'étape (b) présente un potentiel normal plus fort dans la série électrochimique que la poudre de métal qui est imprimée dans l'étape (a).

11. Procédé selon la revendication 9, **caractérisé en ce que** dans l'étape (b) une source électrique externe est utilisée et **en ce que** le métal additionnel dans l'étape (b) présente un potentiel normal plus fort ou plus faible dans la série électrochimique que la poudre de métal qui est imprimée dans l'étape (a).

12. Procédé selon l'une quelconque des revendications 9 à 11, **caractérisé en ce que** la poudre de métal dans l'étape (a) est une poudre qui peut être obtenue par décomposition thermique de pentacarbonyle de fer.

13. Procédé selon l'une quelconque des revendications 9 à 12, **caractérisé en ce que** dans l'étape (a) des motifs sont imprimés à l'aide de formulations d'impression, dans lequel la poudre de métal est agencée sous forme de motifs de type bandes droites ou incurvées ou de motifs de type lignes.

14. Procédé selon l'une quelconque des revendications 9 à 13 destiné à la production de corps selon l'une quelconque des revendications 1 à 8.

15. Utilisation de corps selon l'une quelconque des revendications 1 à 8 pour la décoration intérieure des bâtiments ou des véhicules.
